# EUROPÄISCHE PATENTANMELDUNG

(11) **EP 4 449 874 A1**
(43) Veröffentlichungstag der Anmeldung: **23.10.2024**
(21) Anmeldenummer: 24170831.2
(22) Anmeldetag: 17.04.2024
(51) Int. Cl.: A23G 1/10, A23G 1/14, A23G 1/16

(54) **VORRICHTUNG UND VERFAHREN ZUM BEARBEITEN EINER PRODUKTMASSE**

(30) Priorität: 19.04.2023 DE 102023109853
(71) Anmelder: NETZSCH-Feinmahltechnik GmbH, 95100 Selb (DE)
(72) Erfinder: Kißwetter, Hans-Georg, 95615 Marktredwitz (DE); Knappe, Stephan, 95182 Döhlau (DE); Kapp, Matthias, 91365 Weilersbach (DE)
(74) Vertreter: Isarpatent

(57) **Zusammenfassung**

Die Erfindung bezieht sich auf eine Vorrichtung (1; 1'; 1"; 101; 201) zum Bearbeiten einer Produktmasse (M), mit einem Behälter (2) zur Aufnahme der Produktmasse (M), mindestens einem Produktmassenbearbeitungswerkzeug (17) in dem Behälter (2), das dafür vorgesehen ist, auf die Produktmasse (M) einzuwirken, und mindestens einer Sensoreinrichtung (41; 41a-c) mit einem dielektrischen Sensor (44), wobei die Sensoreinrichtung (41; 41a-c) derart angeordnet und ausgebildet ist, dass mittels des dielektrischen Sensors (44) dielektrische Eigenschaften der Produktmasse (M) in einer Umgebung des dielektrischen Sensors (44) kontinuierlich oder zumindest zeitweise erfassbar sind. Ferner betrifft die Erfindung ein Verfahren zum Bearbeiten einer Produktmasse (M), insbesondere mittels einer derartigen Vorrichtung (1; 1'; 1"; 101; 201).

## Beschreibung

### GEBIET DER ERFINDUNG

Die Erfindung betrifft eine Vorrichtung zum Bearbeiten einer Produktmasse. Ferner betrifft die Erfindung ein Verfahren zum Bearbeiten einer Produktmasse, insbesondere mittels einer derartigen Vorrichtung.

### TECHNISCHER HINTERGRUND

Wenngleich die Erfindung im Zusammenhang mit der Bearbeitung von Produktmassen etwa bei der Herstellung aus deren Ausgangsmaterialien und/oder der Fertigstellung von Produkten unterschiedlichster Art, insbesondere im Zusammenhang mit der Erzeugung und Bearbeitung von pastösen oder teigartigen oder cremeartigen Massen oder anderen Massen, die eine deutliche Viskosität aufweisen und/oder einer eher zähen Flüssigkeit oder Schmelze ähneln, auf den unterschiedlichsten Gebieten Anwendung finden kann, sollen die Erfindung und die ihr zu Grunde liegende Problematik nachfolgend am Beispiel des Bearbeitens einer Schokoladenmasse, dem so genannten Conchieren, exemplarisch näher erläutert werden, ohne die Erfindung jedoch dahingehend einzuschränken.

Zur Erzeugung von Schokoladen werden Ausgangsrohstoffe, insbesondere Kakaomasse, Zucker, Kakaobutter, Milchpulver und/oder Fett vermengt und in einer eigens hierfür vorgesehenen Vorrichtung unter Ausübung von Kompressions- und Scherkräften bearbeitet.

Bei der Herstellung qualitativ hochwertiger Schokoladen wird angestrebt, in einem derartigen Conchierprozess Feuchtigkeit, mithin Wasser, aus der Schokoladenmasse herauszulösen. Die Schokoladenmasse wird zudem beim Conchieren unterschiedlichen Temperaturschüben ausgesetzt, um zu erzielen, dass unangenehmere oder unerwünschte Aromen flüchtig werden und ausgetragen werden. Auf diese Weise wird erreicht, dass die Schokoladenmasse mit zunehmender Conchierzeit immer gefälliger schmeckt. Der Prozess kann durch Einblasen erwärmter Luft unterstützt werden.

Verschiedene Conchiervorrichtungen (auch Conchen genannt) können zum Conchieren von Schokolade verwendet werden, ausgehend von der Ur-Conche des Rudolf Lindt bis hin zu semi-kontinuierlichen Hochleistungsconchen (PIV).

Das Conchieren von Schokoladen ist ein für die Qualität des Produkts bedeutsamer, jedoch relativ zeit- und energieaufwändiger Prozess. In herkömmlicher Vorgehensweise wird die Qualität der hergestellten, conchierten Masse, beispielsweise mit Blick auf den erreichten niedrigen Feuchtegehalt und/oder das Austreiben unerwünschter Aromastoffe, am Ende des Conchierprozesses ermittelt. Falls das Ergebnis nicht den Erwartungen entspricht, somit die geforderte Qualität noch nicht erreicht ist, wird dann der Conchierprozess verlängert.

Eine Conchiervorrichtung sowie ein Verfahren zum Conchieren einer Produktmasse sind beispielsweise in der DE 10 2017 001 784 A1 beschrieben.

Die DE 10 2017 001 784 A1 beschreibt, das Gewicht einer in einem Behälter enthaltenen Produktmasse zu erfassen, um den Entfeuchtungsgrad der Produktmasse festzustellen. Hierzu wird eine Wägezelle vorgeschlagen, die das Gewicht des Behälters mitsamt der in diesen eingefüllten Produktmasse und daraus eine Gewichtsänderung der Produktmasse im Behälter während des Conchier- und/oder Ausförderbetriebs erfassen kann. Darauf basierend kann der Fortschritt des Conchierens oder Ausförderns überwacht werden.

Es wäre wünschenswert, den Herstellungsprozess bei der Bearbeitung von Produktmassen, etwa solchen der vorstehend beschriebenen Arten, zum Beispiel beim Conchieren von Schokoladenmassen zur Erzeugung insbesondere hochwertiger Schokoladen, in noch besserer Weise überwachen und vorzugsweise noch besser steuern oder regeln zu können.

### ZUSAMMENFASSUNG DER ERFINDUNG

Vor diesem Hintergrund ist es eine Aufgabe der Erfindung, eine in verbesserter Weise überwach- und/oder steuer- oder regelbare und somit noch effizientere Bearbeitung einer Produktmasse zu ermöglichen.

Erfindungsgemäß wird diese Aufgabe durch eine Vorrichtung zum Bearbeiten einer Produktmasse mit den Merkmalen des Anspruchs 1 und/oder durch ein Verfahren zum Bearbeiten einer Produktmasse mit den Merkmalen des Anspruchs 14 gelöst.

Demgemäß wird eine Vorrichtung zum Bearbeiten einer Produktmasse vorgeschlagen, welche einen Behälter zur Aufnahme der Produktmasse, mindestens ein Produktmassenbearbeitungswerkzeug in dem Behälter, das dafür vorgesehen ist, auf die Produktmasse einzuwirken, und mindestens eine Sensoreinrichtung mit einem dielektrischen Sensor aufweist.

Hierbei ist die Sensoreinrichtung derart angeordnet und ausgebildet, dass mittels des dielektrischen Sensors dielektrische Eigenschaften der Produktmasse in einer Umgebung des dielektrischen Sensors kontinuierlich oder zumindest zeitweise erfassbar sind.

Darüber hinaus wird erfindungsgemäß ein Verfahren zum Bearbeiten einer Produktmasse, insbesondere mittels einer derartigen Vorrichtung, vorgeschlagen, wobei das Verfahren die Schritte aufweist:
- Einfüllen der Produktmasse und/oder von Ausgangsmaterial zum Erzeugen der Produktmasse in einen Behälter;
- Einwirken auf die Produktmasse mittels mindestens eines Produktmassenbearbeitungswerkzeugs in dem Behälter, wobei die Produktmasse mittels Kontakt mit dem Produktmassenbearbeitungswerkzeug bearbeitet oder gebildet und bearbeitet wird und das Produktmassenbearbeitungswerkzeug mindestens zeitweise mit der Produktmasse in Kontakt steht; und
- Erfassen, mittels einer Sensoreinrichtung mit einem dielektrischen Sensor, von dielektrischen Eigenschaften der Produktmasse in einer Umgebung des dielektrischen Sensors, wobei das Erfassen kontinuierlich oder zumindest zeitweise erfolgt, während sich die Produktmasse in dem Behälter befindet.

Eine der Erfindung zu Grunde liegende Idee besteht darin, ausgehend von den dielektrischen Eigenschaften als physikalischen Eigenschaften der Produktmasse eine Inline-Bestimmung einer Eigenschaft der Produktmasse, die überwacht werden und zum Beispiel einen vorbestimmten Wert erreichen soll, durchzuführen, beispielsweise eine Inline-Bestimmung des Feuchtegehalts oder einer guten Näherung für diesen Feuchtegehalt. Hierbei kann mit Hilfe der Erfindung direkt von der physikalischen Beschaffenheit der Produktmasse, die sich in deren dielektrischen Eigenschaften ausdrückt, ausgegangen werden.

Die dielektrischen Eigenschaften der Produktmasse können vorteilhaft zu gewünschten Zeitpunkten oder in vorbestimmten Zeitintervallen oder auch kontinuierlich ohne wesentliche zeitliche Verzögerung erfasst und ausgewertet werden. Vorzugsweise gelingt somit eine Überwachung der angestrebten Eigenschaft, etwa des Feuchtegehalts, mit Hilfe der Erfindung in Echtzeit oder mindestens nahe Echtzeit. Auf diese Weise wird ermöglicht, die Bearbeitung der Produktmasse in Echtzeit oder zumindest nahe Echtzeit zu steuern und beispielsweise zu optimieren. Zum Beispiel kann die Bearbeitung zu einem hinsichtlich eines oder mehrerer vorbestimmter Kriterien optimalen Zeitpunkt beendet werden. Ferner könnte(n) ein/mehrere andere(r) Stellgröße(n) des Bearbeitungsprozesses zur Optimierung basierend auf der überwachten Eigenschaft für ein optimales Ergebnis gezielt variiert werden. Zudem kann ermöglicht werden, eine Regelung mit einer geeigneten Regelgröße, beispielsweise der angestrebten Eigenschaft der Produktmasse wie etwa dem Feuchtegehalt, zum implementieren.

Die Erfindung vermeidet vorteilhaft ein Probeziehen oder Ähnliches. Das Ziehen von Proben ist nicht nur mit Arbeitsaufwand verbunden, sondern kann ferner gerade hinsichtlich einer angestrebten Reinheit und Kontaminationsfreiheit der Produktmasse - zum Beispiel bei Lebensmitteln wie Schokolade, aber auch bei Kosmetika und dgl. - hohe Anforderungen an Sorgfalt und Sauberkeit stellen und damit einhergehend den Aufwand an Personal, Zeit und Material weiter steigern. Derartiger Aufwand kann durch die Nutzung der dielektrischen Analyse, wie von der vorliegenden Erfindung vorgeschlagen, vermindert oder vermieden werden.

Vorteilhafte Ausgestaltungen und Weiterbildungen der Erfindung ergeben sich aus den Unteransprüchen sowie aus der Beschreibung unter Bezugnahme auf die Zeichnungen.

In einer Ausgestaltung ist die Sensoreinrichtung derart eingerichtet, dass mittels der Sensoreinrichtung ferner eine Temperatur der Produktmasse in der Umgebung des dielektrischen Sensors kontinuierlich oder zumindest zeitweise erfassbar ist. Insbesondere sind hierbei die dielektrischen Eigenschaften und die Temperatur mindestens für im Wesentlichen denselben Bereich der Produktmasse erfassbar. Zum Beispiel kann/können mit Blick auf die dielektrische Analyse die Permittivität und/oder der Verlustfaktor im allgemeinen Fall von der Temperatur abhängen, so zum Beispiel für Wasser. Durch Erfassen der dielektrischen Eigenschaften und zusätzliche Erfassung der Temperatur an derselben Erfassungsstelle, mit anderen Worten mindestens für ein gleiches räumliches Volumenelement der Produktmasse, kann in aussagekräftiger Weise auf die Beschaffenheit der Produktmasse an der Erfassungsstelle geschlossen werden, beispielsweise auf die aktuelle Feuchte der Produktmasse.

Zum Beispiel kann die Sensoreinrichtung mit einem Temperatursensor ausgebildet sein, wobei der Temperatursensor zum Beispiel ein Thermoelement oder ein Messwiderstand sein kann. Beispielsweise kann der Temperatursensor als ein Platinwiderstandssensor oder ein Kupferwiderstandssensor ausgebildet sein.

Insbesondere ist vorgesehen, dass die dielektrischen Eigenschaften und die Temperatur in der Umgebung des dielektrischen Sensors im Wesentlichen gleichzeitig erfassbar sind.

In einer Ausgestaltung ist das Produktmassenbearbeitungswerkzeug in dem Behälter relativ zu diesem bewegbar angeordnet und dafür ausgebildet, um mechanisch auf die Produktmasse einzuwirken. Dies ermöglicht eine zweckmäßige mechanische Bearbeitung der Produktmasse, beispielsweise durch Ausüben von Kräften auf diese, etwa von Druckkräften und/oder Scherkräften auf die Produktmasse. Beispielsweise kann der Behälter im Raum feststehend und das Produktmassenbearbeitungswerkzeug relativ zu dem Behälter in diesem bewegbar angeordnet sein. Insbesondere kann das Produktmassenbearbeitungswerkzeug für eine Umlaufbewegung um ein Zentrum oder eine Achse vorgesehen sein. Alternativ kann jedoch bei anderen Ausgestaltungen zum Beispiel der Behälter bewegbar und das Produktmassenbearbeitungswerkzeug feststehend angeordnet sein, oder es kann in weiteren Ausgestaltungen eine Relativbewegung beider durch Bewegung sowohl des Behälters als auch des Produktmassenbearbeitungswerkzeugs im Raum erreicht werden.

Bei einer Weiterbildung ist die Sensoreinrichtung an einer Wandung des Behälters angeordnet. Auf diese Weise kann die Sensoreinrichtung gut zugänglich angeordnet und deren Anschluss erleichtert werden, insbesondere in Verbindung mit einem feststehenden Behälter.

In einer Ausgestaltung kann die Sensoreinrichtung in einem unteren Bereich der Wandung des Behälters, insbesondere in einer unteren Hälfte der Wandung, weiter bevorzugt in einem unteren Drittel der Wandung, angeordnet sein. Auf diese Weise kann die Schwerkraft dazu genutzt werden, um einen guten Kontakt der Produktmasse mit der Sensoreinrichtung sicherzustellen, was zu einer zuverlässigen Erfassung der dielektrischen Eigenschaften und ggf. der Temperatur beiträgt.

Gemäß einer Weiterbildung ist die Sensoreinrichtung in einem Bereich der Wandung des Behälters, der im Betrieb der Vorrichtung wiederholt von dem Produktmassenbearbeitungswerkzeug überstrichen wird, angeordnet. Bei einer derartigen Weiterbildung kann der Kontakt der Sensoreinrichtung mit der Produktmasse und die Zuverlässigkeit der Erfassung zusätzlich verbessert werden, indem das Produktmassenbearbeitungswerkzeug die Produktmasse beispielsweise unter Druck gegen die Sensoreinrichtung schiebt oder verdrängt.

In einer weiteren Ausgestaltung ist eine zu einem die Produktmasse aufnehmenden Innenbereich des Behälters weisende, für einen Kontakt mit der Produktmasse vorgesehene Oberfläche der Sensoreinrichtung relativ zu einer Wandungsinnenoberfläche des Behälters zurückversetzt angeordnet. Auf diese Weise kann in verbesserter Weise sichergestellt werden, dass ein Anteil der Produktmasse über eine zur Erfassung der dielektrischen Eigenschaften und ggf. der Temperatur hinreichende Zeitspanne in gutem Kontakt mit der Messoberfläche der Sensoreinrichtung verweilt. Insbesondere kann eine Vertiefung in der Behälterwand gebildet sein, an deren Grund sich die Oberfläche der Sensoreinrichtung befindet. Es kann vorgesehen sein, dass das Produktmassenbearbeitungswerkzeug wiederholt den Bereich der Vertiefung mit geringem Abstand überstreicht und wiederholt Teile der Produktmasse in die Vertiefung hineinschiebt, was zu einem guten Kontakt mit der Sensoreinrichtung beiträgt, eine Steigerung der Verweildauer der Produktmasse ermöglicht, und durch regelmäßige Erneuerung der Produktmasse in der Vertiefung eine stets aktuelle Erfassung gestattet.

Ferner kann in einer Ausgestaltung die Vorrichtung mit mehreren Sensoreinrichtungen versehen sein, die jeweils einen dielektrischen Sensor zum zeitweisen oder kontinuierlichen Erfassen von dielektrischen Eigenschaften der Produktmasse jeweils in einer Umgebung des dielektrischen Sensors aufweisen. Ferner können die mehreren Sensoreinrichtungen insbesondere jeweils für die kontinuierliche oder zeitweise Erfassung einer Temperatur der Produktmasse eingerichtet sein. Dies kann zu einer weiteren Verbesserung der Zuverlässigkeit der Erfassung dielektrischer Eigenschaften und insbesondere ferner der Temperatur beitragen. Zum Beispiel kann über die mehreren Werte, die die dielektrischen Eigenschaften und ggf. die Temperatur wiedergeben und von den mehreren Sensoreinrichtungen erfasst werden, eine Mittelung oder eine gewichtete Mittelung vorgenommen werden. Dies kann beispielsweise dazu genutzt werden, Effekte einer relativ großen Bewegungsgeschwindigkeit des Produktmassenbearbeitungswerkzeugs und der damit begrenzten Verweildauer eines Volumenelements der Produktmasse auf der Sensoreinrichtung auszugleichen oder zu korrigieren. Die Verwendung mehrerer dielektrischer Sensoren kann, beispielsweise über eine Mittelwertbildung, zu einer noch höheren Sicherheit der gemessenen dielektrischen Werte beitragen.

Die mehreren Sensoreinrichtungen sind in einer weiteren Weiterbildung entlang einer Umfangsrichtung des Behälters angeordnet.

Insbesondere können die mehreren Sensoreinrichtungen entlang einer Bahn, der das Produktmassenbearbeitungswerkzeug bei der Bearbeitung der Produktmasse im Betrieb der Vorrichtung in wiederholter Weise folgt, voneinander beabstandet angeordnet sein. In dieser Weise können die Sensoreinrichtungen nacheinander durch das Produktmassenbearbeitungswerkzeug in geringem Abstand überstrichen werden, und insbesondere kann hierbei jeweils ein neuer Anteil der Produktmasse mit der Sensoreinrichtung in Kontakt gebracht werden. Die Bahn kann zum Beispiel der Umfangsrichtung des Behälters in einem Abstand zur Wandung des Behälters folgen.

Gemäß einer anderen Ausgestaltung kann die Sensoreinrichtung an einem für einen Kontakt mit der Produktmasse vorgesehenen und in dem Behälter befindlichen Element angeordnet sein. Das Element kann insbesondere in dem Behälter bewegbar angeordnet sein. Beispielsweise kann die Sensoreinrichtung an dem Produktmassenbearbeitungswerkzeug angeordnet sein. Somit wird in alternativer Weise ein guter Kontakt der Sensoreinrichtung mit der Produktmasse ermöglicht, da das Produktmassenbearbeitungswerkzeug beim Bearbeiten der Produktmasse mit dieser intensiv in Kontakt gelangt.

In einer Weiterbildung kann die Sensoreinrichtung im Bereich einer Wirkfläche des Produktmassenbearbeitungswerkzeugs angeordnet sein, insbesondere innerhalb eines Wirkabschnitts des Produktmassenbearbeitungswerkzeugs, der in einem Bearbeitungsbetrieb der Vorrichtung die Produktmasse gegen die Wandung des Behälters drückt. Dies kann den Kontakt einer Messoberfläche der Sensoreinrichtung mit der Produktmasse noch weiter verbessern.

In einer weiteren Ausgestaltung ist vorstellbar, die an der Wandung angeordnete Sensoreinrichtung und die an dem Element in dem Behälter, insbesondere dem Produktmassenbearbeitungswerkzeug, angeordnete Sensoreinrichtung zugleich vorzusehen, wobei die Vorrichtung bei einer derartigen Ausgestaltung dann mindestens zwei der Sensoreinrichtungen aufweist.

In einer Ausgestaltung ist die Vorrichtung für das Bearbeiten einer Lebensmittelproduktmasse ausgebildet. Die Nutzung eines dielektrischen Sensors, um zu einem nutzbaren Näherungswert für zum Beispiel einen Feuchtegehalt der Produktmasse zu gelangen, macht ein häufiges Probeziehen unnötig, vermeidet damit einhergehenden Aufwand und erleichtert eine saubere und hygienisch einwandfreie Arbeitsweise. In einer analogen Ausgestaltung kann das Verfahren für das Bearbeiten einer Lebensmittelproduktmasse eingesetzt werden.

In einer Ausgestaltung ist die Vorrichtung als eine Conchiervorrichtung zum Bearbeiten einer Schokoladenmasse ausgebildet und das Produktmassenbearbeitungswerkzeug ist ein Conchierwerkzeug. Bei Conchieren von Schokoladenmasse ist es für die Qualität der Schokolade von Bedeutung, den Feuchtegehalt der Schokoladenmasse unter einen definierten Schwellwert abzusenken, wodurch zudem unerwünschte Aromastoffe ausgetragen werden. Die Erfindung ermöglicht vorteilhaft eine Inline-Überwachung des Feuchtegehalts und eine Optimierung des Prozesses während der Bearbeitung, wobei wie erwähnt unmittelbar auf physikalische Eigenschaften der Produktmasse zurückgegriffen wird. In analoger Weise kann in einer Weiterbildung das Verfahren zum Bearbeiten einer Schokoladenmasse Anwendung finden.

In weiteren Ausgestaltungen können die Vorrichtung und das Verfahren zum Bearbeiten einer von einer Vielzahl anderer Lebensmittelproduktmassen, beispielsweise bei der Herstellung und/oder Fertigbearbeitung von Ketchup, Mayonnaise oder Saucen, oder beispielsweise bei der Herstellung und/oder Fertigbearbeitung von streichfähigen Lebensmitteln wie Aufstrichen, oder bei der Herstellung und/oder Fertigbearbeitung von Milchprodukten wie etwa Joghurt, oder bei der Bearbeitung von Honig, ausgebildet sein.

In anderen Ausgestaltungen können die Vorrichtung und das Verfahren bei der Bearbeitung anderer Produktmassen, welche keine Lebensmittel sind, Anwendung finden.

Beispielsweise können in einer Ausgestaltung die Vorrichtung und das Verfahren zum Bearbeiten einer Anstrichmittelproduktmasse oder einer Beschichtungsmittelproduktmasse ausgebildet sein, insbesondere bei der Herstellung von Malerfarben oder Lacken. Alternativ könnten die Vorrichtung und das Verfahren in einer Weiterbildung zum Bearbeiten eines viskosen Dichtmittels oder Klebstoffs angewandt werden.

Gemäß einer weiteren Ausgestaltung können die Vorrichtung und das Verfahren zum Bearbeiten einer Kosmetikproduktmasse oder Arzneimittelproduktmasse ausgebildet sein, beispielsweise bei der Herstellung von Cremes, Salben oder Pasten.

Insbesondere bei den vorstehend genannten weiteren Anwendungsfällen wird jeweils eine gute Überwachung und Steuerung des Bearbeitungsvorgangs vorteilhaft ermöglicht, sowie ferner beispielsweise zugleich ein sauberer, kontaminationsarmer Prozess erleichtert.

In einer Ausgestaltung des Verfahrens wird das Produktmassenbearbeitungswerkzeug zum Bearbeiten oder Bilden und Bearbeiten der Produktmasse innerhalb des Behälters relativ zu diesem bewegt. Hierbei kann das Produktmassenbearbeitungswerkzeug beispielsweise entlang einer Bahn bewegt werden, zum Beispiel entlang einer Kreisbahn, und hierbei eine Umlaufbewegung um ein Zentrum oder eine Achse ausführen. Dies ermöglicht eine zweckmäßig implementierbare Bearbeitung der Produktmasse im Behälter.

In einer Weiterbildung des Verfahrens ist mindestens eine Bewegungspause vorgesehen, während der das Bewegen des Produktmassenbearbeitungswerkzeugs unterbrochen oder wesentlich verlangsamt wird. Hierbei ist vorgesehen, dass das Erfassen der dielektrischen Eigenschaften innerhalb der Bewegungspause bei Stillstand oder erheblich verlangsamter Bewegung des Produktmassenbearbeitungswerkzeugs erfolgt oder dass das Erfassen der dielektrischen Eigenschaften kontinuierlich erfolgt und eine Auswertung der während der Bewegungspause bei Stillstand oder erheblich verlangsamter Bewegung des Produktmassenbearbeitungswerkzeugs erfassten dielektrischen Eigenschaften vorgenommen wird. Mittels einer derartigen Bewegungspause kann in wirkungsvoller Weise ein Verweilen eines Produktmassenvolumens in Kontakt mit der Sensoreinrichtung erzielt werden, was zu einer besonders zuverlässigen Erfassung der dielektrischen Eigenschaften beiträgt.

Eine Dauer der Bewegungspause kann beispielsweise mindestens etwa eine Minute betragen. Dies kann dazu beitragen, mittels der Sensoreinrichtung stabile, zuverlässige Messergebnisse zu erhalten und der bis zum Erreichen eines stabilen Niveaus der Messwerte vergehenden, erwarteten Einschwingzeit Rechnung zu tragen.

Gemäß einer Weiterbildung sind mehrere Bewegungspausen vorgesehen. Das Produktmassenbearbeitungswerkzeug wird hierbei in den Bewegungspausen jeweils im Wesentlichen an der gleichen Position entlang einer Bewegungsbahn desselben zum Stillstand gebracht oder verlangsamt bewegt. Dies ermöglicht eine wiederholte Messung zu verschiedenen Zeitpunkten in einer vergleichbaren Konfiguration von Behälter, Werkzeug und Produktmasse.

Das Produktmassenbearbeitungswerkzeug wird vorzugsweise innerhalb eines Abschnitts der Bewegungsbahn desselben zum Stillstand gebracht oder verlangsamt bewegt, in dem das Produktmassenbearbeitungswerkzeug einen Anbringungsort des dielektrischen Sensors überstreicht. Dies trägt zu einem guten Kontakt von Produktmasse und Sensor bei.

Weiter bevorzugt wird das Produktmassenbearbeitungswerkzeug in der Weise zum Stillstand gebracht oder verlangsamt, dass während des Stillstands oder der erheblich verlangsamten Bewegung ein in einem Bearbeitungsbetrieb der Vorrichtung die Produktmasse gegen die Wandung des Behälters drückender Wirkabschnitt des Produktmassenbearbeitungswerkzeugs den Anbringungsort des dielektrischen Sensors überdeckt. Dies ermöglicht einen weiter verbesserten Kontakt mit der Produktmasse und eine weiter verbesserte Erfassung der dielektrischen Eigenschaften.

In einer Ausgestaltung des Verfahrens wird zugleich mit den dielektrischen Eigenschaften eine Temperatur der Produktmasse in der Umgebung des dielektrischen Sensors kontinuierlich oder zumindest zeitweise erfasst. Die Vorteile der Temperaturerfassung sind oben bereits genannt.

Insbesondere wird in einer Weiterbildung eine Näherung oder Schätzung für eine zu überwachende Eigenschaft der Produktmasse, insbesondere einen Feuchtigkeitsgehalt der Produktmasse, unter Verwendung der erfassten dielektrischen Eigenschaften und der erfassten Temperatur gebildet. Somit kann eine nutzbare Aussage über die zu überwachende Eigenschaft anhand aktueller physikalischer Gegebenheiten in der Produktmasse gewonnen werden.

Gemäß einer weiteren Ausgestaltung können die dielektrischen Eigenschaften, insbesondere die dielektrischen Eigenschaften und die Temperatur, der Produktmasse an mehreren Erfassungsstellen erfasst werden. Insbesondere können hierbei die Erfassungsstellen entlang einer Bahn, der das Produktmassenbearbeitungswerkzeug bei der Bearbeitung der Produktmasse in wiederholter Weise folgt, voneinander beabstandet angeordnet sein und nacheinander von dem Produktmassenbearbeitungswerkzeug überstrichen werden. Zum Beispiel kann über die mehreren Werte für die dielektrischen Eigenschaften und ggf. die Temperatur, die an den mehreren Erfassungsstellen erfasst werden, eine Mittelung oder eine gewichtete Mittelung vorgenommen werden. Die vorteilhaften Wirkungen einer derartigen Weiterbildung sind oben bereits genannt.

In einer Weiterbildung kann die Näherung oder Schätzung für die zu überwachende Eigenschaft der Produktmasse unter Verwendung der erfassten Werte für die dielektrischen Eigenschaften und die Temperatur an den mehreren Erfassungsstellen gebildet werden.

Es versteht sich, dass die vorstehenden Ausgestaltungen und Weiterbildungen jeweils in analoger Weise Anwendung auf die Vorrichtung sowie das Verfahren der vorliegenden Erfindung finden können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### KURZBESCHREIBUNG DER ZEICHNUNGEN

Die Erfindung wird nachfolgend anhand der in den schematischen Figuren der Zeichnung angegebenen Ausführungsbeispiele näher erläutert. Hierbei zeigen:
- Fig. 1: eine als eine Conchiervorrichtung ausgebildete Vorrichtung zum Bearbeiten einer Produktmasse gemäß einem ersten Ausführungsbeispiel, in einem Längsmittelschnitt;
- Fig. 2: ein Detail D der Schnittdarstellung der Fig. 1 für die Conchiervorrichtung gemäß dem ersten Ausführungsbeispiel;
- Fig. 3: eine teilweise Darstellung der Conchiervorrichtung der Fig. 1 in einem Querschnitt I-I;
- Fig. 4: eine Welleneinrichtung der Conchiervorrichtung gemäß dem ersten Ausführungsbeispiel, mit einer Welle und daran angeordneten Conchierwerkzeugen mit Abstreifern sowie Umlenkwerkzeugen;
- Fig. 5: eine als eine Conchiervorrichtung ausgebildete Vorrichtung zum Bearbeiten einer Produktmasse gemäß einem zweiten Ausführungsbeispiel, in einem Längsmittelschnitt;
- Fig. 6: eine als eine Conchiervorrichtung ausgebildete Vorrichtung zum Bearbeiten einer Produktmasse gemäß einem dritten Ausführungsbeispiel, in einem Längsmittelschnitt;
- Fig. 7: eine Detaildarstellung in der Umgebung D', siehe Fig. 6, einer Sensoreinrichtung der Vorrichtung gemäß dem dritten Ausführungsbeispiel, in einem Zustand mit überstreichendem Produktmassenbearbeitungswerkzeug;
- Fig. 8: eine teilweise Querschnittsdarstellung einer als Conchiervorrichtung ausgebildeten Vorrichtung zum Bearbeiten einer Produktmasse gemäß einem vierten Ausführungsbeispiel;
- Fig. 9: eine Detaildarstellung, analog Fig. 2, einer Conchiervorrichtung gemäß einem fünften Ausführungsbeispiel in einem Längsmittelschnitt derselben;
- Fig. 10: eine Detaildarstellung, analog Fig. 7, einer Conchiervorrichtung gemäß einem sechsten Ausführungsbeispiel in einem Längsmittelschnitt derselben;
- Fig. 11: eine Welleneinrichtung einer als Conchiervorrichtung ausgebildeten Vorrichtung zum Bearbeiten einer Produktmasse gemäß einem siebten Ausführungsbeispiel, mit einer Welle und daran angeordneten Conchierwerkzeugen mit Abstreifern sowie Umlenkwerkzeugen;
- Fig. 12: eine teilweise Querschnittsdarstellung der Conchiervorrichtung gemäß dem siebten Ausführungsbeispiel;
- Fig. 13: ein schematisches Ablaufdiagramm zur Illustration von Verfahren gemäß Ausführungsbeispielen der Erfindung; und
- Fig. 14: eine beispielhafte Sensoreinrichtung, die bei den Ausführungsbeispielen der Fig. 1-13 jeweils zum Einsatz kommen kann, in einer Seitenansicht.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### DETAILLIERTE BESCHREIBUNG VON AUSFÜHRUNGSBEISPIELEN

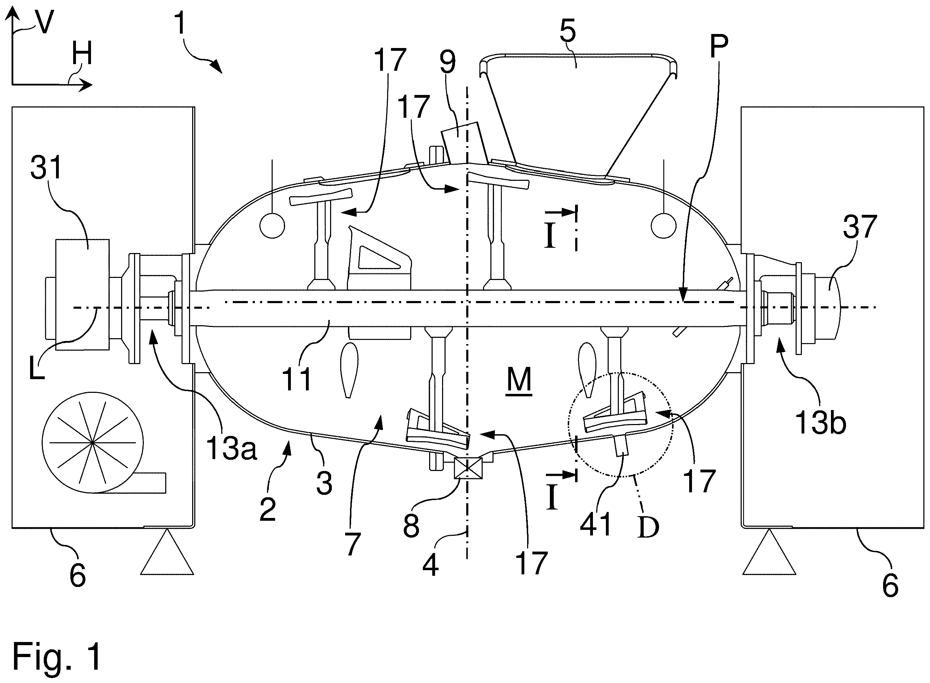

Fig. 1 zeigt eine als Conchiervorrichtung ausgebildete Vorrichtung 1 zum Bearbeiten einer Produktmasse M gemäß einem ersten Ausführungsbeispiel, wobei es sich bei der Produktmasse M um eine Schokoladenmasse handelt. Die Vorrichtung 1 weist einen Behälter 2 auf, der eine Wandung 3 aufweist und die Produktmasse M aufnimmt. Die zu bearbeitende Produktmasse M und/oder Ausgangsmaterial in Form von Rohstoffen zur Bildung der Produktmasse M kann/können über einen Einfülltrichter 5 in einem oberen Bereich des Behälters 2 in diesen eingefüllt werden. Ein Innenbereich des Behälters 2 nimmt die Produktmasse M auf, wobei in Fig. 1 ein Füllpegel P eingezeichnet ist, bis zu dem die Produktmasse M oder das Ausgangsmaterial eingefüllt wird. Die Produktmasse und/oder das Ausgangsmaterial ist/sind in Fig. 1 mittels des Bezugszeichens M nur durch Bezeichnung des Bereichs, in dem sie bzw. es vorhanden ist/sind, angedeutet.

Der Innenbereich des Behälters 2 und die Wandung 3 sind zu einer vertikalen Symmetrieebene 4 im Wesentlichen spiegelsymmetrisch ausgebildet. Der Behälter 2 erstreckt sich mit einer Längsachse desselben im Wesentlichen entlang einer horizontalen Richtung H und ist beidseits jeweils mit einer Rahmenanordnung 6 feststehend gekoppelt. Die in horizontaler Richtung H voneinander beabstandeten, feststehenden Rahmenanordnungen 6 stützen sich jeweils über Auflager auf einem im Wesentlichen horizontalen Boden ab.

Die Vorrichtung 1 weist eine Welleneinrichtung 7 mit einer Welle 11 auf, wobei sich die Welle 11 derart durch den Behälter 2 erstreckt, dass eine Rotations- und Längsachse L der Welle 11 im Wesentlichen parallel zur horizontalen Richtung H verläuft. Enden 13a, 13b der Welle 11 sind jeweils in einer der Rahmenanordnungen 6 drehbar gelagert. Die Welle 11 kann innerhalb des Behälters 2 um ihre Längsachse L rotieren, um die Produktmasse M zu bearbeiten.

An einer Unterseite des Behälters 2 ist im Bereich der Symmetrieebene 4 ein Produktabfluss 8 mit einer wahlweise öffenbaren und schließbaren Ventileinrichtung vorgesehen, durch den die Produktmasse M nach dem Ende der Bearbeitung aus dem Behälter 2 ausgefördert werden kann. Ferner ist an einer Oberseite des Behälters 2, im Bereich der Symmetrieebene 4, ein Luftauslass 9 angeordnet.

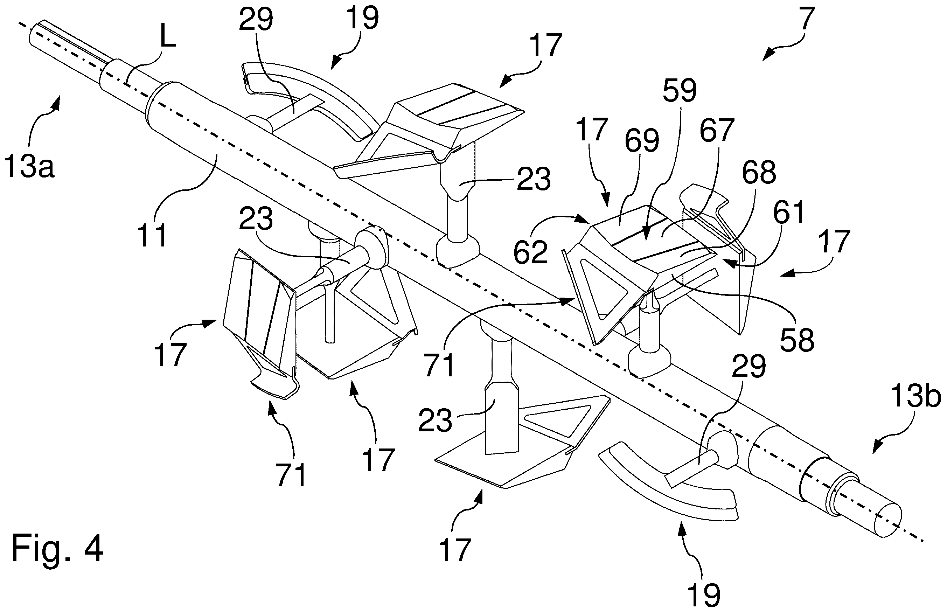

An einem innerhalb des Behälters 2 aufgenommenen Abschnitt der Welle 11 weist diese mehrere Produktmassenbearbeitungswerkzeuge 17 auf, die als Conchierwerkzeuge ausgebildet und in gleichmäßigen Abständen auf der Welle 11 angeordnet sind. Ferner sind an dem im Behälter 2 aufgenommenen Abschnitt der Welle 11, jeweils den Enden 13a und 13b benachbart, Produktmassenumlenkwerkzeuge 19 auf der Welle 11 angeordnet, derart, dass die Produktmassenbearbeitungswerkzeuge 17 sich in axialer Richtung längs der Achse L zwischen den Produktmassenumlenkwerkzeugen 19 befinden. Fig. 4 zeigt die Welleneinrichtung 7 mit der Welle 11 und mit den mehreren Werkzeugen 17 und 19 perspektivisch.

Die Produktmassenbearbeitungswerkzeuge 17 sind jeweils durch einen Positionierabschnitt 23 in einem jeweils vorbestimmten radialen Abstand zur Welle 11 angeordnet und mit der Welle 11 fest verbunden. Ferner weisen die Produktmassenbearbeitungswerkzeuge 17 jeweils einen Körper 58 mit einer Wirkfläche 59 sowie einen mit dem Körper 58 gekoppelten Abstreifer 71 auf. Bis auf ihre Positionierung entlang der Längsachse L und in Umfangsrichtung der Welle 11 sowie die Ausrichtung des Abstreifers 71 und der Wirkfläche 59 sind die Produktmassenbearbeitungswerkzeuge 17 weitgehend identisch zueinander ausgebildet.

Die Produktmassenumlenkwerkzeuge 19 sind jeweils durch einen Positionierabschnitt 29 ebenfalls in jeweils vorbestimmter Weise von der Welle 11 radial beabstandet mit dieser fest verbunden und sind dafür ausgebildet, einen erwünschten Produktmassenstrom innerhalb des Behälters 2 zu erzeugen.

Bei einer Rotation der Welle 11 um deren Längsachse L bewegen sich die Werkzeuge 17, 19 somit jeweils auf einer Kreisbahn B umlaufend um die Achse L. Hierbei rotiert die Welleneinrichtung 7 mit den fest mit der Welle 11 verbundenen Werkzeugen 17, 19 als ein einheitlicher Körper. Mit Hilfe der als Conchierwerkzeuge ausgebildeten Produktmassenbearbeitungswerkzeuge 17 kann zur Bearbeitung mechanisch auf die Produktmasse M eingewirkt werden, indem diese zwischen der Wirkfläche 59 und der Wandung 3 Kompressions- und/ oder Scherkräften ausgesetzt wird. Der Innenbereich des Behälters 2 ist im Wesentlichen rotationssymmetrisch um die Achse L ausgebildet, so dass die Produktmassenbearbeitungswerkzeuge 17 sich jeweils entlang der Kreisbahn B bewegen, wobei der Körper 58 sich in im Wesentlichen konstantem Abstand von der Innenseite der Wandung 3 relativ zu dieser bewegt. Die Kreisbahn B folgt somit einer Umfangsrichtung U der Wandung 3 in im Wesentlichen konstantem Abstand von dieser.

Die Welle 11 ist an deren erstem Ende 13a, siehe Fig. 1 und 4, mit einer Antriebsanordnung 31 gekoppelt. Die Antriebsanordnung 31 ist in der in Fig. 1 linksseitig angeordneten Rahmenanordnung 6 vorgesehen und dafür ausgebildet, die Welle 11 für die Rotation um deren Achse L anzutreiben. Ferner ist die Welle 11 an deren zweitem Ende 13b um die Längsachse L drehbar in einer Lagereinheit 37 gelagert. Die Lagereinheit 37 ist in der in Fig. 1 rechtsseitig angeordneten Rahmenanordnung 6 vorgesehen.

Die Wirkfläche 59 jedes der Produktmassenbearbeitungswerkzeuge 17 weist einen in einem Produktmassenbearbeitungsbetrieb der Vorrichtung 1 einlaufseitigen Bereich 61 und einen auslaufseitigen Bereich 62 auf, wobei der Bereich 61 in einer der Rotation R entsprechenden Umlaufrichtung des Werkzeugs 17 betrachtet dem Bereich 62 vorgelagert ist. Ein Zwischenraum zwischen der Wirkfläche 59 und der Innenseite der Wandung 3 verengt sich vom ersten Bereich 61 zum zweiten Bereich 62 hin und erweitert sich dem zweiten Bereich 62 nachgelagert wieder. Ein Wirkabschnitt des Produktmassenbearbeitungswerkzeugs 17 zwischen dem Bereich 61 und dem Bereich 62 kann somit die Produktmasse M bei deren Bearbeitung gegen die Wandung 3 drücken.

Die Wirkfläche 59 umfasst eine sich in Richtung der Umlaufbahn B erstreckende mittige Vertiefung 67, deren Breite entgegen der Umlaufrichtung des Werkzeugs 17 abnimmt. Ferner weist die Wirkfläche 59 beidseits der Vertiefung 67 jeweils einen Randbereich 68, 69 auf, wobei die Randbereiche 68, 69 jeweils relativ zur Fläche der Vertiefung 67 geneigt sind.

Die vorstehend beschriebene, in Fig. 1-4 zeichnerisch dargestellte Geometrie der Wirkfläche 59 ermöglicht es im Zusammenwirken mit einer Wandungsinnenoberfläche 47 der Wandung 3, bei der Rotation R mechanisch auf die Produktmasse M einzuwirken und diese zu bearbeiten. Die Wirkfläche 59 des Produktmassenbearbeitungswerkzeugs 17 ist bezüglich der Längsachse L radial außenseitig an diesem angeordnet und somit der Wandungsinnenoberfläche 47 zugewandt. Bei der Rotation R der Welle 11 wird ein Anteil der Produktmasse M, der zwischen die Wirkfläche 59 und die Wandungsinnenoberfläche 47 gelangt, Kompressions- und/oder Scherkräften ausgesetzt, und somit wird die Schokoladenmasse M bearbeitet, was als Conchieren der Schokoladenmasse M bezeichnet wird. Der Abstreifer 71 folgt bei der Rotationsbewegung R dem Körper 58 und bewegt sich relativ zu der Wandungsinnenoberfläche 47 in geringem Abstand von dieser, oder liegt bei der Bewegung an der Wandungsinnenoberfläche 47 an.

Die Conchiervorrichtung 1 der Fig. 1 weist ferner eine Sensoreinrichtung 41 auf. Die Sensoreinrichtung 41 beinhaltet einen dielektrischen Sensor 44, mittels desselben dielektrische Eigenschaften der Produktmasse M in einer Umgebung des dielektrischen Sensors 44 kontinuierlich oder zumindest zeitweise erfassbar sind. Die erfassten Werte geben hierbei allgemein physikalische Eigenschaften der Produktmasse M in einem mit der Sensoreinrichtung 41 in Kontakt stehenden Teilvolumen der Produktmasse M an. Als erfasste physikalische, dielektrische Eigenschaften kommen insbesondere die Permittivität, der dielektrische Verlustfaktor und/oder davon abgeleitete Größen wie zum Beispiel die Ionenleitfähigkeit und/oder die lonenviskosität in Betracht.

Die Sensoreinrichtung 41 ist derart eingerichtet, dass mittels der Sensoreinrichtung 41 zudem eine Temperatur der Produktmasse M in der Umgebung des dielektrischen Sensors 44 kontinuierlich oder zumindest zeitweise erfassbar ist. Insbesondere können durch die Sensoreinrichtung 41 die dielektrischen Eigenschaften und die Temperatur zum gleichen Zeitpunkt und in Bezug auf ein im Wesentlichen identisches Volumenelement der Produktmasse M erfasst werden. Anders formuliert, können die dielektrischen Eigenschaften und die Temperatur im Wesentlichen an derselben Stelle der Produktmasse M erfasst werden.

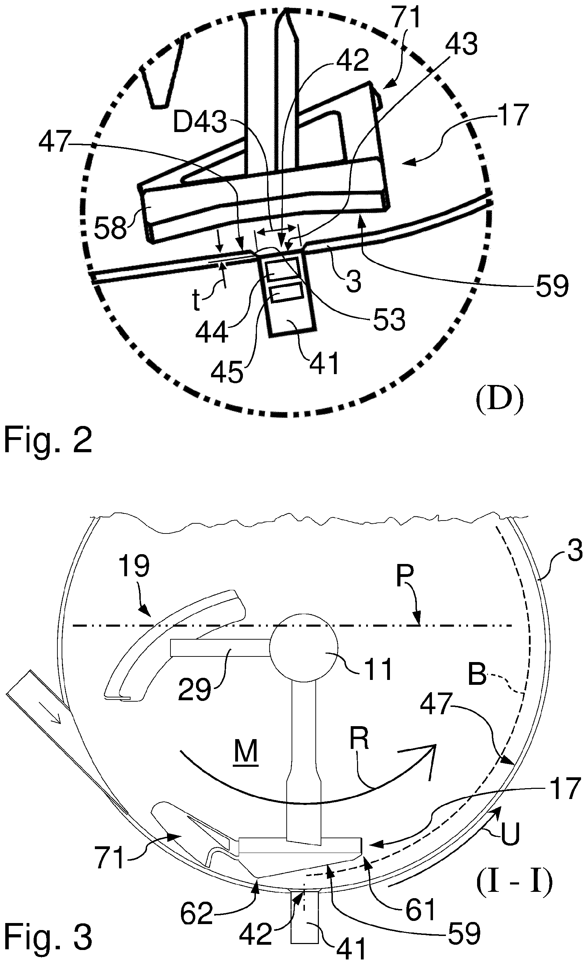

Die Sensoreinrichtung 41 ist bei dem ersten Ausführungsbeispiel an einer Wandung 3 des Behälters 2 angeordnet, steht somit im Raum fest und kann somit auf einfache und gut zugängliche Weise angeschlossen und versorgt werden. Auf diese Weise ist eine Erfassungsstelle 42 für die dielektrischen Eigenschaften und die Temperatur definiert. Die Anordnung im Bereich der Wandung 3 ist im Detail D in Fig. 2 näher dargestellt. Die Sensoreinrichtung 41 ist als eine Sensoreinheit ausgebildet, deren beispielsweise im Wesentlichen kreisrunde, für die Messungen der dielektrischen Eigenschaft(en) und der Temperatur wirksame Oberfläche 43 der Produktmasse M im Innenbereich des Behälters 2 zugewandt ist. Andere geometrische Formen der Oberfläche 43 sind ebenfalls vorstellbar, eine runde Gestaltung trägt jedoch zu einer einfachen und zweckmäßigen Unterbringung der Sensoreinrichtung 41 in der Wandung 3 bei. In Fig. 2 ist ein Durchmesser der Oberfläche 43 mit D43 bezeichnet. D43 kann, etwa in einem Beispiel einer relativ kleinen Conchiervorrichtung mit einem Nennfassungsvermögen von beispielsweise 300 kg, zum Beispiel zwischen etwa 4 cm und etwa 5 cm betragen. Größere oder kleinere Abmessungen sind jedoch ebenfalls vorstellbar und D43 kann zwischen etwa 1 cm und etwa 6 cm betragen, etwa für Conchiervorrichtungen anderen Fassungsvermögens. Bei einem anderen Beispiel kann D43 für kleinere Conchiervorrichtungen zwischen etwa 2 cm und etwa 3 cm betragen.

Die Oberfläche 43 gelangt im Betrieb der Vorrichtung 1 mit der Produktmasse M in Kontakt. Bezüglich der Wandungsinnenoberfläche 47 des Behälters 2 ist die Oberfläche 43 um einen Abstand t zurückversetzt, wodurch eine Vertiefung 53, die bei dem gezeigten Ausführungsbeispiel ebenfalls rund ist, in der Wandung 3 gebildet ist. Die Oberfläche 43 ist am Boden der Vertiefung 53 angeordnet. Die Tiefe t der Vertiefung 53 kann zum Beispiel zwischen etwa t = 1 mm und etwa t = 10 mm betragen.

Die Sensoreinrichtung 41 ist derart an der Wandung 3 angeordnet, dass sie von dem Produktmassenbearbeitungswerkzeug 17, das sich zur Bearbeitung der Produktmasse M im Inneren des Behälters 2 auf der Kreisbahn B bewegt, in wiederholter Weise überstrichen wird. Zwischen der Wandung 3 und dem Körper 58 des Produktmassenbearbeitungswerkzeugs 17 ist ein radialer Abstand vorgesehen. Eine Schichthöhe der Produktmasse M über der Erfassungsstelle 42 kann beispielhaft zwischen etwa 5 mm und etwa 15 mm betragen.

Durch die Bewegung des Produktmassenbearbeitungswerkzeugs 17 wird in wiederholter Weise ein anderer Anteil der Produktmasse M in die Vertiefung 53 geschoben. Um dies zu erleichtern und mithin den Austausch der in der Vertiefung 53 befindlichen Produktmasse M zu fördern, ist die Vertiefung 53 an deren zum Inneren des Behälters 2 gewandten Rand angeschrägt oder mit einer Fase versehen. Alternativ kann der zum Inneren des Behälters 2 gewandte Rand der Vertiefung 53 mit einer Rundung ausgestattet sein.

Die Sensoreinrichtung 41 beinhaltet bei dem Ausführungsbeispiel der Fig. 1 bis 4 beispielhaft einen dielektrischen Sensor 44 in Monotrodenbauweise für die dielektrische Analyse (DEA). Der dielektrische Sensor 44 arbeitet hierbei nach dem Prinzip eines Plattenkondensators, wobei als zweite Elektrode die Umgebung inklusive der untersuchten Produktmasse M wirkt. Die Kapazität dieses Messkondensators hängt neben den geometrischen Abmessungen desselben und der Dielektrizitätskonstante im Vakuum auch von der Dielektrizitätszahl in der Umgebung der als Monotrode ausgeführten Elektrode des Sensors 44 ab. Bei Änderungen der dielektrischen Eigenschaften der Umgebung, die sich in einem typischen Abstand von der aktiven Messoberfläche 43 des dielektrischen Sensors 44 befinden, ändert sich auch der elektrische Widerstand bzw. die elektrische Leitfähigkeit.

Bei den vorliegend beschriebenen Ausführungsbeispielen ändert sich der erzeugte Widerstand und damit das dielektrische Verhalten während des Prozesses der Bearbeitung der Produktmasse M. Über eine Mess- und Steuerelektronik eines Dielektrischen Analysators (DEA) wird über den dielektrischen Sensor 44 - der wie vorstehend erläutert beispielhaft mit einer Monotrode als Einfach-Elektrode ausgebildet ist, wobei die gesamte Umgebung inklusive der Produktmasse M als zweite Elektrode wirkt - eine Wechselspannung mit einer vorbestimmten Frequenz und einer vorbestimmten Amplitude aufgegeben sowie ein resultierender Wechselstrom und eine Phasenverschiebung zwischen Eingangsspannung und Ausgangsstrom gemessen. Das mittels des Sensors 44 erfasste Signal wird zum Beispiel aufgezeichnet und kann mittels einer Software für den Prozess ausgewertet werden. Hierbei werden die sich im Laufe des Prozesses ändernden, signifikanten dielektrischen Messgrößen, beispielsweise Permittivität oder dielektrischer Verlustfaktor, mit Hilfe der Software dargestellt und ausgewertet. Von diesen Messgrößen abgeleitete Größen, wie zum Beispiel die lonenviskosität, dienen als relevante Werte für die Beschreibung des Prozesses. Bei dem vorliegend unter Bezugnahme auf Fig. 1 bis 4 beschriebenen Ausführungsbeispiel etwa, sowie bei den weiteren nachstehenden Ausführungsbeispielen, kann die Messfrequenz, somit die Frequenz der angelegten Wechselspannung, zum Beispiel 1 kHz betragen. Messungen bei anderen Frequenzen sind vorstellbar.

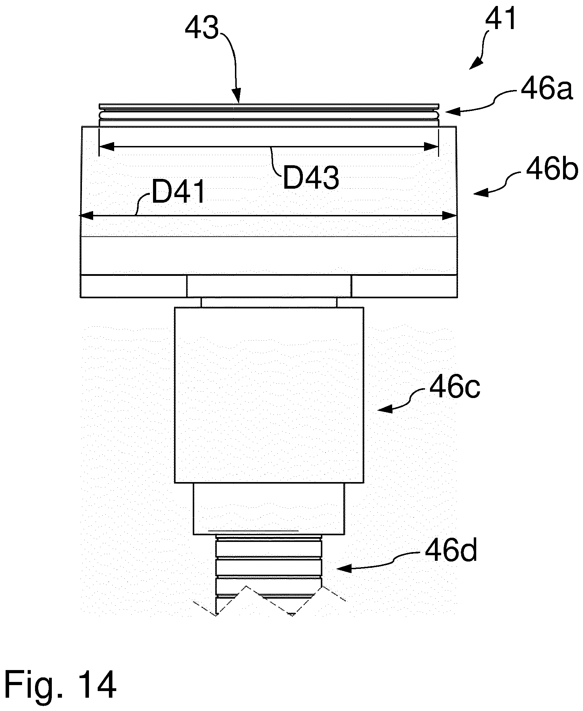

Fig. 14 zeigt eine beispielhafte Sensoreinrichtung 41 in Seitenansicht, wobei auch die für die Messung der Produktmasse M zugewandte Oberfläche 43 und deren Durchmesser D43 gezeigt sind. Die Sensoreinrichtung 41 ist als eine Einheit mit einem ersten im Wesentlichen zylinderartigen Abschnitt 46a, einem zweiten im Wesentlichen zylinderartigen Abschnitt 46b und einem dritten im Wesentlichen zylinderartigen Abschnitt 46c ausgebildet. Die Abschnitte 46a, 46b, 46c sind koaxial zueinander angeordnet. Der erste Abschnitt 46a hat den Durchmesser D43 und trägt die Oberfläche 43. An den Abschnitt 46a schließt der zweite Abschnitt 46b an, der einen Durchmesser D41 aufweist, welcher größer als D43 ist und einen Außendurchmesser D41 der Sensoreinrichtung 41 bildet. Beispielsweise kann D41 etwa 5 cm betragen. Die Abschnitte 46a, 46b schließen somit mit einem umlaufenden Absatz aneinander an. An den Abschnitt 46b schließt auf dessen vom Abschnitt 46a abgewandter Seite der dritte Abschnitt 46c an, dessen Durchmesser kleiner als D43 ist. Vom Abschnitt 46c führt eine Anschlussleitung 46d für die Sensoreinrichtung 41 nach außen weg.

Zur Erfassung der Temperatur der Produktmasse M kann die Sensoreinrichtung 41 zudem einen Messwiderstand, etwa einen Platin- oder Kupfer-Messwiderstand, umfassen, oder stattdessen ein Thermoelement aufweisen. Der Messwiderstand, etwa Pt- oder Cu-Messwiderstand, oder das Thermoelement bildet hierbei einen Temperatursensor 45, der gemeinsam mit dem dielektrischen Sensor 44 in einer Sensoreinrichtung 41 als Sensoreinheit verbaut ist, siehe auch Fig. 2. Auf diese Weise können stets Messwertpaare oder -sätze mit dielektrischer/n Eigenschaft(en) und Temperatur für die Erfassungsstelle 42 erfasst werden. Somit kann zum Beispiel auch eine Erfassung der dielektrische(n) Eigenschaft(en) an der Erfassungsstelle 42 als Funktion der Temperatur ermöglicht werden.

Alle vorgenannten Sensoren oder Messelemente stellen keine abschließende Aufzählung dar. Für den Fachmann ist klar, dass an der Stelle der Sensoreinrichtung 41 alle dem Fachmann als solche bekannten Sensoren und/oder Messeinrichtungen verbaut werden können, die für die Erfassung der für die Herstellung der Produktmasse M relevanten Messgrößen geeignet sind.

In Fig. 2 sind der dielektrische Sensor 44 und der Temperatursensor 45 in rein schematischer Weise als Bauteile der Sensoreinrichtung 41 dargestellt, welche die Erfassung von dielektrischen Eigenschaften und Temperatur an der Stelle 42 ermöglichen. Hierbei kann insbesondere die relative Anordnung beider Sensoren 44, 45 zueinander von der in Fig. 2 schematisch gezeigten abweichen.

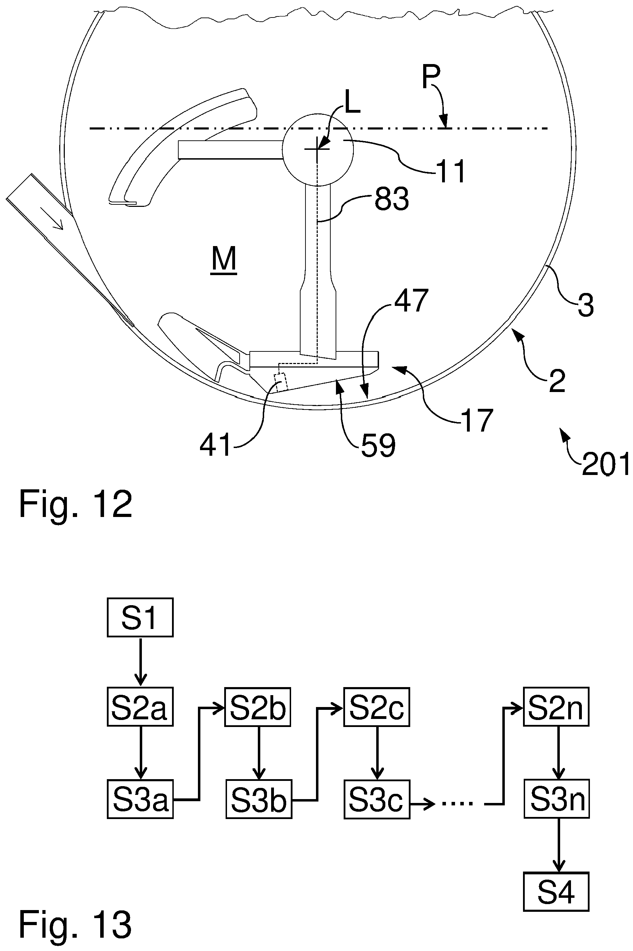

Zum Bearbeiten der Produktmasse M, hier zum Conchieren der Schokoladenmasse, wird die Vorrichtung 1 in der nachfolgend beschriebenen Weise betrieben, die in Fig. 13 nach Art eine Ablaufdiagramms schematisch illustriert ist.

Gezeigt ist in Fig. 13 ein schematischer Ablauf mit einem Schritt S1 eines Einfüllens von Produktmasse M und/oder Ausgangsmaterial, mehreren Bearbeitungsschritten S2a, S2b, S2c bis S2n, sowie mehreren Bewegungspausen S3a, S3b, S3c bis S3n, und einem Schritt S4 des Entnehmens oder Ausförderns der Produktmasse M.

Im Schritt S1 wird/werden in den Behälter 2 die Produktmasse M und/oder Ausgangsmaterial zum Erzeugen der Produktmasse M eingefüllt. Beispielsweise können im Schritt S1 Rohstoffe umfassend Kakaomasse, Zucker, Kakaobutter und Milchpulver bis zum Füllpegel P in den Behälter 2 gefüllt werden. Die Produktmasse M und/oder die Rohstoffe ist/sind in den Figuren nicht zeichnerisch dargestellt, sondern nur durch Kennzeichnung des Bereichs, in dem die Masse M und/oder die Rohstoffe vorhanden ist bzw. sind, angedeutet.

Mittels der Antriebsanordnung 31 wird im Schritt S2a die Welle 11 in Rotation R versetzt und die im Behälter 2 befindlichen Rohstoffe sowie die sich daraus bildende Produktmasse M bearbeitet, d.h. vorliegend conchiert. Hierbei erfolgt ein mechanisches Bearbeiten und eine Durchmischung der Produktmasse M, ein Aufbringen von Kräften auf die Produktmasse M mittels der Wirkflächen 59 sowie ein Austrag von Feuchtigkeit und unerwünschten Aromastoffen über den Luftauslass 9. Die Rotation der Welle 11 im Schritt S2a wird über einen Zeitraum, der beispielsweise vordefiniert ist, fortgesetzt und währenddessen die Masse fortlaufend bearbeitet. Der Feuchtegehalt F der Masse M soll hierbei bis zum Ende des gesamten Bearbeitungsprozesses, also vor dem Ausfördern im Schritt S4, auf einen gewünschten niedrigen Zielfeuchtegehalt F_{SOLL, FINAL} reduziert werden.

Zum Beispiel ab dem Beginn der Bearbeitung im Schritt S2a werden kontinuierlich mittels der Sensoreinrichtung 41 dielektrische Eigenschaften der Produktmasse M sowie die Temperatur jeweils in der Umgebung des dielektrischen Sensors zeitaufgelöst und bevorzugt gleichzeitig erfasst. Die Erfassung der dielektrischen Eigenschaften und der Temperatur in dieser Weise wird bei einem Ausführungsbeispiel fortgesetzt, bis die Bearbeitung der Produktmasse M beendet ist und die Produktmasse M im Schritt S4 aus dem Behälter 2 ausgefördert wird.

Mit zunehmender Trocknung der Produktmasse M und Rückgang des Feuchtegehalts F treten Veränderungen in den dielektrischen Eigenschaften ein, die durch die Sensoreinrichtung 41 erfassbar sind. Mit Hilfe der dielektrischen Analyse wird hierbei das Verhalten von Ionen und Dipolen im elektrischen Wechselfeld erfasst. Ionen wandern zur gegensätzlich geladenen Elektrode. Diese lonenmobilität wird auch als Ionenleitfähigkeit bezeichnet. Beispielsweise geht mit fortgesetzter Trocknung der Produktmasse M die lonenleitfähigkeit zurück, während dementsprechend die so genannte lonenviskosität ansteigt. Die erfasste Temperatur der Produktmasse M wird mitberücksichtigt, und somit können die ermittelten Feuchtegehalte der Produktmasse M immer bei gleichen Temperaturen verglichen und gut korreliert werden.

Nach Ablauf des Bearbeitungszeitraums für den Schritt S2a wird die Welle 11 in einer vordefinierten Position angehalten und somit die Bewegung der Produktmassenbearbeitungswerkzeuge 17 unterbrochen. Die Welle 11 wird hierbei in der Weise zum Stillstand gebracht, dass eines der Produktmassenbearbeitungswerkzeuge 17, welches den Anbringungsort der Sensoreinrichtung 41 und somit deren Erfassungsstelle 42 regelmäßig passiert, in einem Abschnitt seiner Kreisbahn B zum Stehen kommt, in dem es die Sensoreinrichtung 41 gerade überstreicht. Bevorzugt wird das Produktmassenbearbeitungswerkzeug 17 in einer Position zum Stillstand gebracht, in der sich die Sensoreinrichtung 41 zwischen den Bereichen 61 und 62 befindet und ein Anteil der Produktmasse M gegen die Sensoreinrichtung 41 gedrückt wird. Eine derartige Position eines der Produktmassenbearbeitungswerkzeuge 17 zeigt beispielhaft Fig. 3.

Die Welle 11 verweilt im Schritt S3a eine Zeitspanne t3a, die wiederum zum Beispiel vordefiniert sein kann. Währenddessen wird die zeitaufgelöste Erfassung der dielektrischen Eigenschaften und der Temperatur fortgesetzt. Die während des Stillstandszeitraums t3a oder während eines Ausschnitts desselben, zum Beispiel eines Unterintervalls innerhalb des Stillstandszeitraums t3a, erfassten Werte für die dielektrischen Eigenschaften und die Temperatur werden ausgewertet, mit anderen Worten es wird aus diesen Werten ein Näherungswert für die zu überwachende Eigenschaft der Produktmasse M, vorliegend den Feuchtegehalt F, gebildet. Dieser Näherungswert kann dann beispielsweise mit dem finalen Zielwert F_{SOLL, FINAL} oder einem zeitabhängigen Sollwert F_{SOLL} (t) oder beiden verglichen werden.

Angesichts dessen, dass die Bearbeitung eine fortgesetzte Umwälzung und Durchmischung der Produktmasse M herbeiführt, ermöglicht die lokale Erfassung der dielektrischen Eigenschaft und der Temperatur vorteilhaft mit guter Genauigkeit eine Aussage über den jeweils aktuellen Feuchtegehalt der gesamten Produktmasse M im Behälter. Auf diese Weise kann der Bearbeitungsprozess, hier das Conchieren, in erheblich verbesserter Weise überwacht und insbesondere abhängig vom Messergebnis, mithin von dem gewonnenen Näherungswert für den Feuchtegehalt F, gesteuert oder geregelt werden. Die Bearbeitung der Produktmasse M kann auf diese Weise effizienter gestaltet werden, sowohl eine zu kurze als auch eine übermäßige Bearbeitung können zuverlässig vermieden werden.

Dem Schritt S3a wird nachfolgend im Schritt S2b die Welle 11 wieder in Rotation R versetzt und die Produktmasse M weiterbearbeitet, wie vorstehend beschrieben. Auf den Schritt S2b folgt eine weitere Bewegungspause S3b mit erneuter Auswertung der von der Sensoreinrichtung 41 erfassten Werte, wie für S3a erläutert. Daraufhin folgt ein weiterer Bearbeitungsschritt S2c und eine weitere Bewegungspause S3c, wie soeben beschrieben. Die Anzahl an Bearbeitungsschritten und Bewegungspausen kann nach Bedarf angepasst werden. Allgemein können zum Beispiel n Bearbeitungsschritte und n Bewegungspausen vorgesehen werden. Der Stillstand des Produktmassenbearbeitungswerkzeugs 17 erfolgt vorzugsweise stets an derselben Position des Produktmassenbearbeitungswerkzeugs 17 entlang dessen Bahn B, mit anderen Worten in derselben Winkelstellung der Welle 11.

Hinsichtlich der zeitlichen Dauer kann beim Conchierprozess von Schokoladenmasse M, der oftmals mehrere Stunden dauert, zum Beispiel eine Länge der Bearbeitungsschritte t2a, t2b, t2c, ..., t2n von jeweils etwa 0,5 h und eine Länge t3a, t3b, t3c, ..., t3n der Bewegungspausen von jeweils etwa 1 min, vorgesehen sein. Andere Dauern sind jedoch vorstellbar. Ferner kann zudem bei einigen Varianten vorgesehen sein, dass beispielsweise die Länge der Bearbeitungsschritte über der Gesamtbearbeitungszeit nicht konstant ist, sondern variiert, die zeitliche Verteilung der Auswertung erfasster Werte somit über der Zeit nicht gleichförmig ist.

In einer Variante des in Fig. 13 illustrierten Verfahrens kann weiterhin vorgesehen sein, dass die Erfassung von Werten für die dielektrischen Eigenschaften und/oder die Temperatur durch die Sensoreinrichtung 41 nur in den Bewegungspausen S3a-S3n oder jeweils einem Teilintervall dieser und somit bei Stillstand der Welle 11 vorgenommen wird und die auf diese Weise erfassten Werte für die Bewegungspausen S3a-S3n oder jeweils für ein Teilintervall dieser ausgewertet werden.

In einer Variante der vorstehend unter Bezugnahme auf Fig. 13 beschriebenen Vorgehensweise ist es denkbar, in den Bewegungspausen S3a-S3n statt vollständigen Stillstands eine relativ zu dem Bearbeitungsbetrieb in den Schritten S2a-S2n stark verlangsamte Rotation R der Welle 11 vorzusehen. Darüber hinaus gilt bei dieser Variante das Obige analog.

Während des Bearbeitungsprozesses kann zum Beispiel in einem, einigen oder allen der Schritte S2a-S2n erwärmte Luft durch einen Zufuhrkanal ins Innere des Behälters 2 eingebracht werden. Auch die Zufuhr von Zusätzen, etwa fetthaltigen Zusätzen, ist möglich.

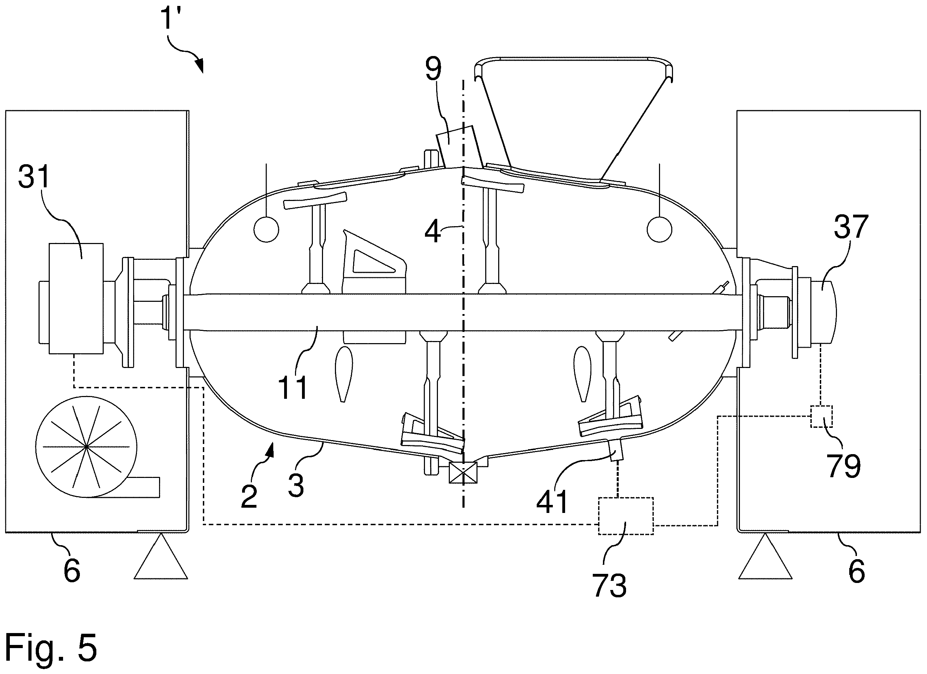

In Fig. 5 ist für eine Vorrichtung 1' gemäß einem zweiten Ausführungsbeispiel schematisch eine Auswerte- und Steuerungsvorrichtung 73 illustriert, mittels der Antriebsanordnung 31 gesteuert und die erfassten Werte für die dielektrischen Eigenschaften und die Temperatur, die die Sensoreinrichtung 41 bereitstellt, ausgewertet werden. Basierend auf dem Ergebnis der Auswertung wird durch die Auswerte- und Steuerungsvorrichtung 73 der Betrieb der Vorrichtung 1' gesteuert. Um, wie vorstehend beschrieben, die Welle 11 für eine zuverlässige Messung in den Bewegungspausen S3a-S3n stets in derselben Winkelstellung anhalten, oder in der Variante verlangsamen, zu können, ist zudem eine Drehwinkelerfassungseinrichtung 79 vorgesehen, deren erfasster Drehwinkelwert von der Steuerungsvorrichtung 73 mit verarbeitet wird, um die Antriebsanordnung 31 zur Umsetzung der Bewegungspausen S3aS3n anzusteuern. Darüber hinaus treffen die Ausführungen zum ersten Ausführungsbeispiel auch auf die Vorrichtung 1' zu. Die Vorrichtung 73 kann insbesondere ferner als Auswerte- und Regelungsvorrichtung 73 ausgestaltet werden, um eine Regelung mit einer Regelgröße wie etwa dem Feuchtegehalt F zu implementieren.

Aus Fig. 1-3 wird ersichtlich, dass die Sensoreinrichtung 41 bei dem ersten Ausführungsbeispiel in einem unteren Bereich der Wandung 3, und hierbei am tiefsten Punkt des Querschnitts des Behälters 2 beispielhaft am Ort des in Fig. 1 am weitesten rechts angeordneten Produktmassenbearbeitungswerkzeugs 17 angeordnet ist. Mit Blick auf den gesamten Behälter 2 befindet sich die Sensoreinrichtung 41 in einem unteren Drittel der Wandung 3, bezogen auf die Vertikalrichtung V.

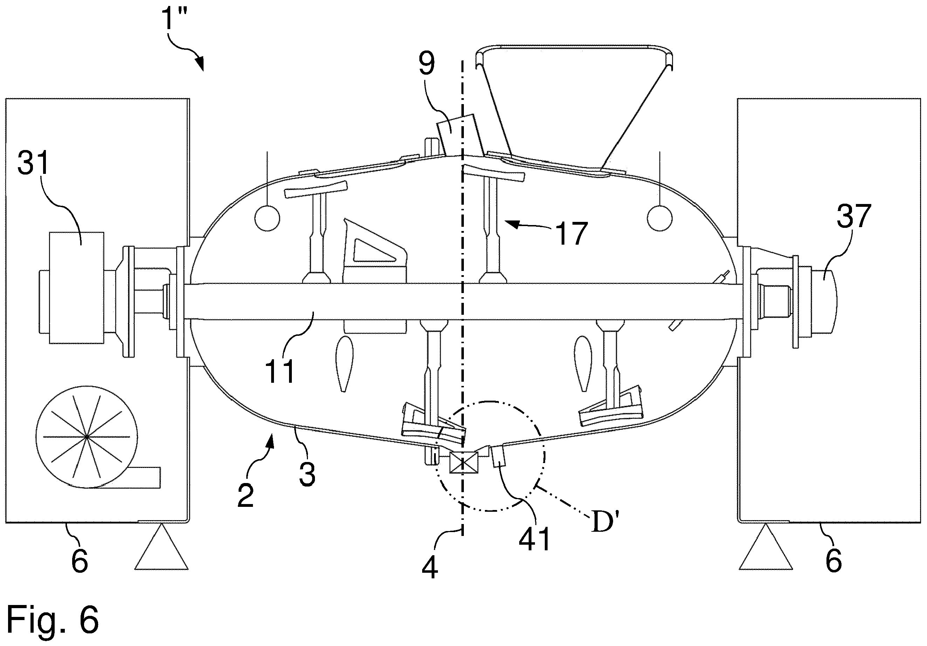

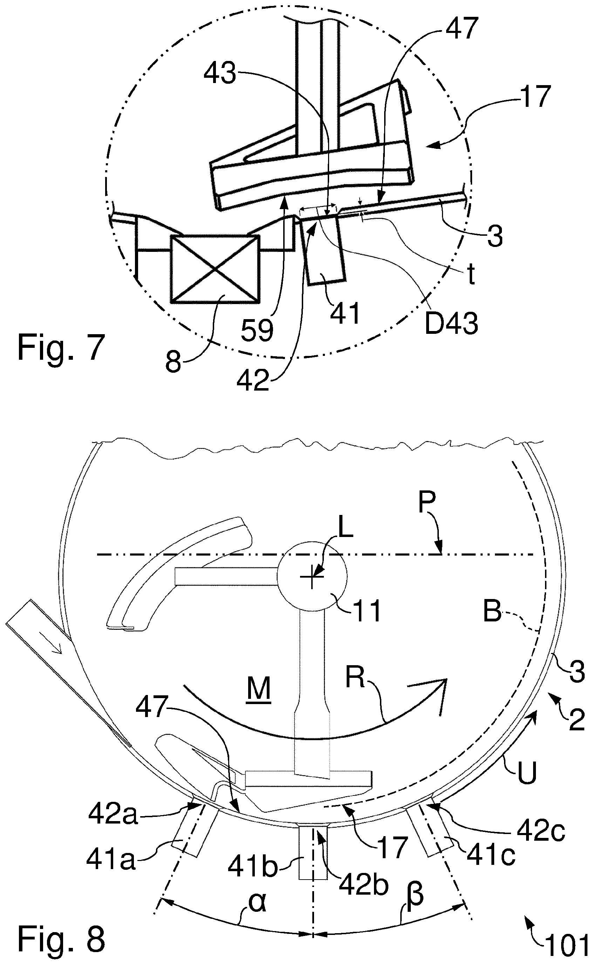

Die Sensoreinrichtung 41 kann alternativ zum Beispiel an einer noch weiter zum tiefsten Punkt des Behälters 2 in dessen Längsmittelschnitt befindlichen Stelle nahe der Symmetrieebene 4 angeordnet werden. Dies ist für ein drittes Ausführungsbeispiel der Erfindung in Fig. 6 skizziert. Auch in Fig. 6 wird die Sensoreinrichtung 41 wie bei den vorstehend beschriebenen Ausführungsbeispielen durch eines der Produktmassenbearbeitungswerkzeuge 17 überstrichen. Bis auf den Ort der Anordnung der Sensoreinrichtung 41 ist die Conchiervorrichtung 1" der Fig. 6 analog der Vorrichtung 1 oder 1' gemäß dem ersten oder zweiten Ausführungsbeispiel der Fig. 1-5 ausgebildet. Fig. 7 zeigt die Anordnung der Sensoreinrichtung 41 gemäß Fig. 6 im Detail an der in Fig. 6 mit D' bezeichneten Stelle, nebst des Rückversatzes der Oberfläche 43 der Sensoreinrichtung 41 um die Distanz t.

Eine Vorrichtung 101 gemäß einem vierten Ausführungsbeispiel ist in Fig. 8 illustriert und unterscheidet sich von jener des ersten Ausführungsbeispiels darin, dass die Vorrichtung 101 mit mehreren Sensoreinrichtungen 41a, 41b und 41c versehen ist. In Fig. 8 sind drei Sensoreinrichtungen 41a-c vorgesehen, wobei jedoch zwei oder mehr als drei Sensoreinrichtungen ebenfalls denkbar sind. Jede der Sensoreinrichtungen 41a-c ist wie die oben unter Bezugnahme auf das erste Ausführungsbeispiel beschriebene Sensoreinrichtung 41 ausgebildet und wird als solche wie oben beschrieben betrieben. Über Vorstehendes hinaus ist die Vorrichtung 101 der Fig. 8 wie jene der Fig. 1-4 oder 5 aufgebaut.

Fig. 8 zeigt eine teilweise Querschnittsdarstellung durch die Vorrichtung 101 im Bereich des Behälters 2, analog dem in Fig. 1 angedeuteten Schnitt I - I.

Wie bei den vorstehend beschriebenen Ausführungsbeispielen bewegt sich das Produktmassenbearbeitungswerkzeug 17 auf einer Kreisbahn B um die Achse L, wenn die Welle 11 durch die Antriebsanordnung 31 in Rotation R versetzt wird, wobei die Kreisbahn B einer Umfangsrichtung U des Behälters 2 in konstantem Abstand zur Wandungsinnenoberfläche 47 folgt. Die mehreren Sensoreinrichtungen 41a, 41b, 41c sind in der Wandung 3 in Umfangsrichtung U entlang der Bahn B, mit anderen Worten auf einer Projektion dieser auf die Wandungsinnenoberfläche 47, voneinander jeweils beabstandet angeordnet. In Fig. 8 ist der Abstand der Sensoreinrichtungen 41a, 41b als ein Winkel α und der Abstand der Sensoreinrichtungen 41b, 41c als ein Winkel β angegeben, wobei stattdessen jedoch beispielsweise jeweils eine Bogenlänge entlang der Wandungsinnenoberfläche 47 angegeben sein könnte. Bei dem Ausführungsbeispiel der Fig. 8 sind die Sensoreinrichtungen 41a-c gleichmäßig voneinander beabstandet, es gilt somit α = β.

Um in einem Inline-Verfahren eine gute Näherung für den aktuellen Feuchtegehalt F der Produktmasse M, hier beispielhaft der Schokoladenmasse, zu erhalten, kann bei dem vierten Ausführungsbeispiel eine Mittelung oder gewichtete Mittelung der durch die Sensoreinrichtungen 41a, 41b, 41c an Erfassungsstellen 42a, 42b bzw. 42c entlang der Bahn B im Bereich der Oberflächen 43 erfassten Werte jeweils für die dielektrischen Eigenschaften und die Temperatur durchgeführt werden. Hierbei ist es denkbar, die Stillstandszeiten in den oben beschriebenen Bewegungspausen S3a-S3n, bzw. in der Variante die Zeiten verlangsamter Bewegung, zu verkürzen oder die Bewegungspausen wegzulassen und mit Hilfe der Mittelung über mehrere Messstellen 42a, 42b, 42c eine hinreichend genaue Näherung zu erzielen.

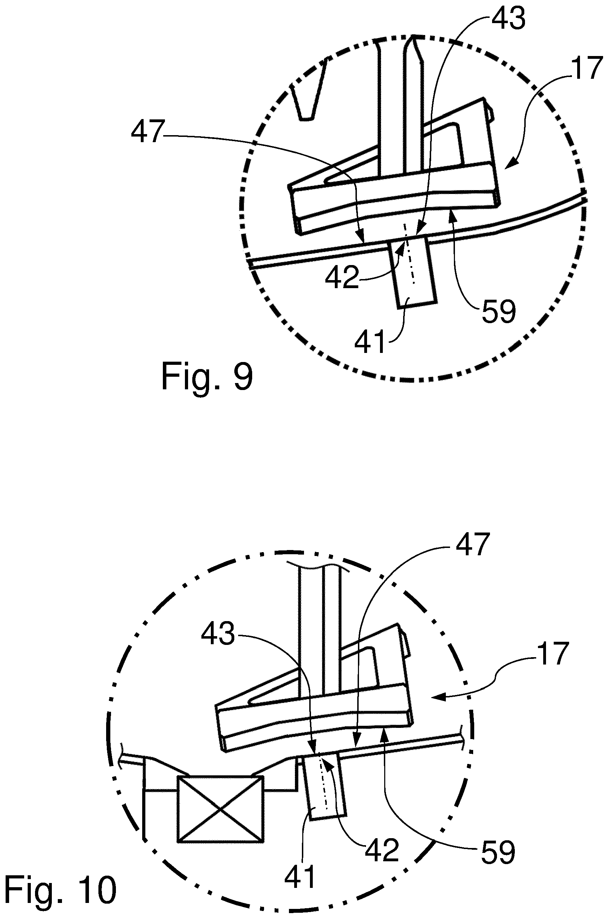

Ein Detail einer Vorrichtung gemäß einem fünften Ausführungsbeispiel ist in Fig. 9 dargestellt. Von der Vorrichtung 1, 1' gemäß dem ersten oder zweiten Ausführungsbeispiel der Fig. 1-4 bzw. 5 unterscheidet sich die Vorrichtung des fünften Ausführungsbeispiels lediglich darin, dass die Sensoreinrichtung 41 derart in der Wandung 3 des Behälters 2 angeordnet ist, dass die mit der Produktmasse M in Kontakt kommende Oberfläche 43 mit der Wandungsinnenoberfläche 47 bündig ist. Die Bündigkeit kann zum Beispiel die Reinigung der Vorrichtung weiter vereinfachen, wobei eine hinreichende Verweildauer der Masse M in Kontakt mit der Oberfläche 43 etwa durch Bewegungspausen, wie oben beschrieben, sichergestellt wird.

Fig. 10 zeigt in analoger Weise eine Vorrichtung gemäß einem sechsten Ausführungsbeispiel, die sich von der Vorrichtung 1" der Fig. 6 und 7 lediglich darin unterscheidet, dass wiederum die Oberfläche 43 der Sensoreinrichtung 41 bündig mit der Wandungsinnenoberfläche 47 abschließt.

Es versteht sich, dass eine bündige Anordnung der Oberfläche 43 mit der Innenoberfläche 47, wie in Fig. 9 oder 10, gleichfalls vorgesehen sein kann, wenn die Vorrichtung mehrere Sensoreinrichtungen 41a-c, etwa entlang der Bahn B, aufweist. Insbesondere kann in einer Variante des vierten Ausführungsbeispiels der Fig. 8 die Oberfläche 43 einer, einiger oder aller der Sensoreinrichtungen 41a-c mit der Wandungsinnenoberfläche 47 bündig sein, wobei in einer derartigen Ausgestaltung die Verarbeitung der an den mehreren Erfassungsstellen erfassten Werte zusätzlich dazu beitragen kann, Effekte verkürzter Verweildauern der Produktmasse M in Kontakt mit den Oberflächen 43 zu vermindern oder zu korrigieren.

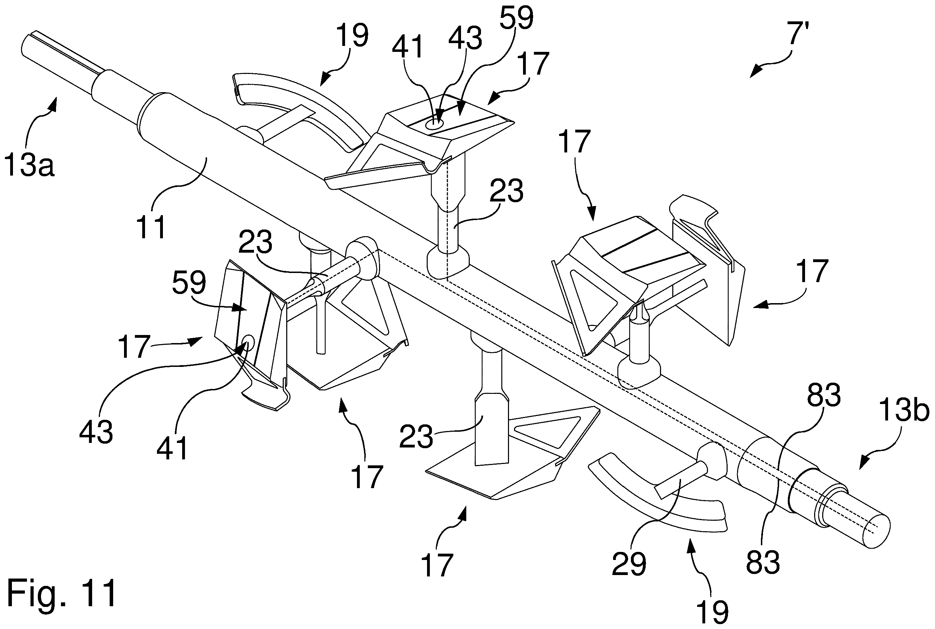

Eine Vorrichtung 201 zur Bearbeitung einer Produktmasse M gemäß einem siebten Ausführungsbeispiel wird im Folgenden unter Bezugnahme auf Fig. 11 und 12 beschrieben. Hierzu werden nachstehend die Unterschiede des siebten Ausführungsbeispiels gegenüber dem ersten Ausführungsbeispiel beschrieben, wobei darüber hinausgehend auf Obiges verwiesen wird.

Bei dem siebten Ausführungsbeispiel weist die Vorrichtung 201 eine modifizierte Welleneinrichtung 7' auf. Die Welleneinrichtung 7' entspricht in deren mechanischem Aufbau der Welleneinrichtung 7, wobei jedoch zusätzlich eines oder mehrere der Produktmassenbearbeitungswerkzeuge 17, in Fig. 11 beispielhaft zwei dieser, mit einer Sensoreinrichtung 41 ausgestattet ist bzw. jeweils ausgestattet sind. Anders als bei dem ersten Ausführungsbeispiel ist bei dem siebten Ausführungsbeispiel somit die Sensoreinrichtung 41 nicht im Bereich der Wandung 3 angeordnet, sondern die Sensoreinrichtung(en) 41 ist bzw. sind an dem für den Kontakt mit der Produktmasse M vorgesehenen Produktmassenbearbeitungswerkzeug 17, das Kompressions- und/oder Scherkräfte auf Anteile die Produktmasse M ausübt, angeordnet. Bei dem Beispiel der Fig. 11, 12 ist die für die Messung wirksame Oberfläche 43 der Sensoreinrichtungen 41 jeweils im Bereich der Wirkfläche 59 im Wirkabschnitt zwischen den Bereichen 61 und 62 angeordnet.

Die Erfassung der dielektrischen Eigenschaften und der Temperatur und deren Auswertung, oder deren Auswertung bei kontinuierlicher Erfassung, erfolgt bei dem siebten Ausführungsbeispiel für die Sensoreinrichtungen 41 jeweils für eine Position des die Sensoreinrichtung 41 tragenden Produktmassenbearbeitungswerkzeugs 17, in der ein guter Kontakt der Produktmasse M mit der Sensoreinrichtung 41 gegeben ist, beispielsweise in der in Fig. 12 gezeigten Position des Werkzeugs 17. Auch im Falle des siebten Ausführungsbeispiels können, wie oben zu Fig. 13 erläutert, Bewegungspausen S3a, S3b, S3c, ..., S3n vorgesehen werden, um die Erfassung zu verbessern.

Die Sensoreinrichtungen 41 in Fig. 11 entsprechen jeweils der oben für das erste Ausführungsbeispiel beschriebenen Sensoreinrichtung 41, insbesondere hinsichtlich Aufbau und Funktionsweise.

Die Ansteuerung der Sensoreinrichtungen 41 und die Erfassung von Werten für die dielektrischen Eigenschaften und die Temperatur können beispielsweise mit Hilfe von Leitungen 83 erreicht werden, die durch den Positionierabschnitt 23 und die Welle 11 geführt und an dem Wellenende 13b nach außen kontaktiert werden. Alternativ wäre eine drahtlose Übertragung denkbar.

Insbesondere im Falle des siebten Ausführungsbeispiels kann eine Erfassung der Winkelstellung der Welle mittels der Drehwinkelerfassungseinrichtung 79 erfolgen, um Werte für die dielektrischen Eigenschaften und die Temperatur für Zeiträume oder Zeitintervalle zu erfassen und auszuwerten, in denen die Oberfläche 43 mit der Masse M in Kontakt ist. Zu diesem Zweck kann zudem alternativ oder zusätzlich zur Drehwinkelerfassung ein mechanischer Widerstand, der von der Antriebsanordnung 31 für die Rotation R überwunden werden muss, zeitaufgelöst detektiert werden, um jene Zeiträume zu ermitteln, in denen ein Produktmassenbearbeitungswerkzeug 17 mit Sensoreinrichtung 41 in die Produktmasse M eintaucht.

In einer Variante des siebten Ausführungsbeispiels könnte die Sensoreinrichtung 41 an einem der Produktmassenumlenkwerkzeuge 19 angeordnet sein.

Ferner ist es vorstellbar, in einer weiteren Variante die Welleneinrichtung 7' des siebten Ausführungsbeispiels oder dessen Variante bei einer der Vorrichtungen gemäß dem ersten bis sechsten Ausführungsbeispiel oder deren Varianten einzusetzen.

Beschrieben sind somit gemäß den vorstehenden Ausführungsbeispielen insbesondere Verfahren zur Inline-Bestimmung des Feuchtigkeitsgehalts beim Conchier-Prozess in der Schokoladenherstellung, sowie Vorrichtungen, mittels der derartige Verfahren durchführbar sind.

Die vorliegende Erfindung ist jedoch nicht auf die Bearbeitung oder das Conchieren einer Schokoladenmasse beschränkt, sondern kann auf die Bearbeitung von unterschiedlichsten Produktmassen M Anwendung finden. Beispielsweise kann die Erfindung zur Bearbeitung von anderen Lebensmittelmassen, von Produktmassen aus dem Bereich der Kosmetika oder Arzneimittel, oder von Produktmassen aus dem Gebiet der Farben oder Beschichtungsmittel oder Dichtmittel oder Klebstoffe Anwendung finden, wobei beispielsweise die Formgebung des Behälters 2 und/oder der Bearbeitungswerkzeuge 17 und ggf. Umlenkwerkzeuge 19 an die jeweilige Masse M angepasst werden kann/können. Zudem kann bei derartigen anderen Massen statt des Feuchtegehalts eine andere zu überwachende Eigenschaft der Produktmasse gewählt werden, für die basierend auf den dielektrischen Eigenschaften und zum Beispiel der Temperatur Rückschlüsse gezogen und eine Näherung errechnet werden kann.

Obwohl die vorliegende Erfindung anhand bevorzugter Ausführungsbeispiele vorstehend vollständig beschrieben wurde, ist sie nicht darauf beschränkt, sondern kann auf vielfältige Art und Weise modifiziert werden.

Beispielsweise ist die Erfindung nicht auf die geometrische Gestaltung des Behälters und der Produktmassenbearbeitungswerkzeuge sowie die Anzahl der letzteren, wie oben beschrieben und in den Figuren gezeigt, beschränkt.

### Bezugszeichenliste

- 1, 1', 1": Vorrichtung
- 101,201: Vorrichtung
- 2: Behälter
- 3: Wandung (Behälter)
- 4: Symmetrieebene
- 5: Einfülltrichter
- 6: Rahmenanordnung
- 7, 7': Welleneinrichtung
- 8: Produktabfluss
- 9: Luftauslass
- 11: Welle
- 13a, 13b: Endabschnitt (Welle)
- 17: Produktmassenbearbeitungswerkzeug
- 19: Produktmassenumlenkwerkzeug
- 23, 29: Positionierabschnitt
- 31: Antriebsanordnung
- 37: Lagereinheit
- 41, 41a-c: Sensoreinrichtung
- 42, 42a-c: Erfassungsstelle
- 43: Oberfläche
- 44: dielektrischer Sensor
- 45: Temperatursensor
- 46a: erster Abschnitt (Sensoreinrichtung)
- 46b: zweiter Abschnitt (Sensoreinrichtung)
- 46c: dritter Abschnitt (Sensoreinrichtung)
- 46d: Anschlussleitung
- 47: Wandungsinnenoberfläche
- 53: Vertiefung
- 58: Körper (Produktmassenbearbeitungswerkzeug)
- 59: Wirkfläche
- 61, 62: Bereich
- 67: mittige Vertiefung (Wirkfläche)
- 68, 69: Randbereich (Wirkfläche)
- 71: Abstreifer
- 73: Auswerte- und Steuerungsvorrichtung
- 79: Drehwinkelerfassungseinrichtung
- 83: Leitung
- D41: Durchmesser (Sensoreinrichtung)
- D43: Durchmesser (Oberfläche (Sensoreinrichtung))
- B: Bahn
- H: horizontale Richtung
- L: Längsachse (Welle)
- M: Produktmasse
- P: Produktpegel
- R: Rotationsrichtung
- U: Umfangsrichtung (Behälter)
- V: vertikale Richtung
- α, β: Winkel
- S1: Einfüllschritt
- S2a,b,c,n: Bearbeitungsschritte
- S3a,b,c,n: Pausen
- S4: Entnahmeschritt

## Patentansprüche

1. Vorrichtung (1; 1'; 1"; 101; 201) zum Bearbeiten einer Produktmasse (M), mit einem Behälter (2) zur Aufnahme der Produktmasse (M),
mindestens einem Produktmassenbearbeitungswerkzeug (17) in dem Behälter (2), das dafür vorgesehen ist, auf die Produktmasse (M) einzuwirken, und
mindestens einer Sensoreinrichtung (41; 41a-c) mit einem dielektrischen Sensor (44), wobei die Sensoreinrichtung (41; 41a-c) derart angeordnet und ausgebildet ist, dass mittels des dielektrischen Sensors (44) dielektrische Eigenschaften der Produktmasse (M) in einer Umgebung des dielektrischen Sensors (44) kontinuierlich oder zumindest zeitweise erfassbar sind.

2. Vorrichtung nach Anspruch 1,
**dadurch gekennzeichnet, dass** die Sensoreinrichtung (41; 41a-c) derart eingerichtet ist, dass mittels der Sensoreinrichtung (41; 41a-c) ferner eine Temperatur der Produktmasse (M) in der Umgebung des dielektrischen Sensors (44) kontinuierlich oder zumindest zeitweise erfassbar ist, und insbesondere dass die dielektrischen Eigenschaften und die Temperatur mindestens für im Wesentlichen denselben Bereich der Produktmasse (M) erfassbar sind.

3. Vorrichtung nach einem der vorstehenden Ansprüche,
**dadurch gekennzeichnet, dass** das Produktmassenbearbeitungswerkzeug (17) in dem Behälter (2) relativ zu diesem bewegbar angeordnet und dafür ausgebildet ist, um mechanisch auf die Produktmasse (M) einzuwirken.

4. Vorrichtung nach einem der vorstehenden Ansprüche,
**dadurch gekennzeichnet, dass** die Sensoreinrichtung (41; 41a-c) an einer Wandung (3) des Behälters (2) angeordnet ist.

5. Vorrichtung nach Anspruch 4,
**dadurch gekennzeichnet, dass** die Sensoreinrichtung (41; 41a-c) in einem unteren Bereich der Wandung (3) des Behälters (2), insbesondere in einer unteren Hälfte der Wandung (3), weiter bevorzugt in einem unteren Drittel der Wandung (3), angeordnet ist.

6. Vorrichtung nach Anspruch 4 oder 5,
**dadurch gekennzeichnet, dass** die Sensoreinrichtung (41; 41a-c) in einem Bereich der Wandung (3) des Behälters (2), der im Betrieb der Vorrichtung (1; 1'; 1") wiederholt von dem Produktmassenbearbeitungswerkzeug (17) überstrichen wird, angeordnet ist.

7. Vorrichtung nach einem der vorstehenden Ansprüche,
**dadurch gekennzeichnet, dass** eine zu einem die Produktmasse (M) aufnehmenden Innenbereich des Behälters (2) weisende, für einen Kontakt mit der Produktmasse (M) vorgesehene Oberfläche (43) der Sensoreinrichtung (41; 41a-c) relativ zu einer Wandungsinnenoberfläche (47) des Behälters (2) zurückversetzt angeordnet ist.

8. Vorrichtung nach einem der vorstehenden Ansprüche,
**dadurch gekennzeichnet, dass** die Vorrichtung (101) mit mehreren Sensoreinrichtungen (41a-c) versehen ist, die jeweils einen dielektrischen Sensor (44) zum zeitweisen oder kontinuierlichen Erfassen von dielektrischen Eigenschaften der Produktmasse (M) jeweils in einer Umgebung des dielektrischen Sensors (44) aufweisen und die insbesondere ferner jeweils für die kontinuierliche oder zeitweise Erfassung einer Temperatur der Produktmasse (M) eingerichtet sind.

9. Vorrichtung nach Anspruch 8,
**dadurch gekennzeichnet, dass** die mehreren Sensoreinrichtungen (41a-c) entlang einer Umfangsrichtung (U) des Behälters (2) angeordnet sind.

10. Vorrichtung nach Anspruch 8 oder 9,
**dadurch gekennzeichnet, dass** die mehreren Sensoreinrichtungen (41a-c) entlang einer Bahn (B), der das Produktmassenbearbeitungswerkzeug (17) bei der Bearbeitung der Produktmasse (M) im Betrieb der Vorrichtung (101) in wiederholter Weise folgt, voneinander beabstandet angeordnet sind.

11. Vorrichtung nach einem der vorstehenden Ansprüche,
**dadurch gekennzeichnet, dass** die Sensoreinrichtung (41) an einem für einen Kontakt mit der Produktmasse (M) vorgesehenen und in dem Behälter (2) befindlichen Element, beispielsweise an dem Produktmassenbearbeitungswerkzeug (17), angeordnet ist.

12. Vorrichtung nach einem der vorstehenden Ansprüche,
**dadurch gekennzeichnet, dass** die Vorrichtung (1; 1'; 1"; 101; 201) für das Bearbeiten einer Lebensmittelproduktmasse ausgebildet ist.

13. Vorrichtung nach einem der vorstehenden Ansprüche,
**dadurch gekennzeichnet, dass** die Vorrichtung (1; 1'; 1"; 101; 201) als eine Conchiervorrichtung zum Bearbeiten einer Schokoladenmasse ausgebildet ist und das Produktmassenbearbeitungswerkzeug (17) ein Conchierwerkzeug ist.

14. Verfahren zum Bearbeiten einer Produktmasse (M), insbesondere mittels einer Vorrichtung (1; 1'; 1"; 101; 201) gemäß einem der vorstehenden Ansprüche, mit den Schritten:
- Einfüllen der Produktmasse (M) und/oder von Ausgangsmaterial zum Erzeugen der Produktmasse (M) in einen Behälter (2);
- Einwirken auf die Produktmasse (M) mittels mindestens eines Produktmassenbearbeitungswerkzeugs (17) in dem Behälter (2), wobei die Produktmasse (M) mittels Kontakt mit dem Produktmassenbearbeitungswerkzeug (17) bearbeitet oder gebildet und bearbeitet wird und das Produktmassenbearbeitungswerkzeug (17) mindestens zeitweise mit der Produktmasse (M) in Kontakt steht; und
- Erfassen, mittels einer Sensoreinrichtung (41; 41a-c) mit einem dielektrischen Sensor (44), von dielektrischen Eigenschaften der Produktmasse (M) in einer Umgebung des dielektrischen Sensors (44), wobei das Erfassen kontinuierlich oder zumindest zeitweise erfolgt, während sich die Produktmasse (M) in dem Behälter (2) befindet.

15. Verfahren nach Anspruch 14,
**dadurch gekennzeichnet, dass** das Produktmassenbearbeitungswerkzeug (17) zum Bearbeiten oder Bilden und Bearbeiten der Produktmasse (M) innerhalb des Behälters (2) relativ zu diesem bewegt wird.

16. Verfahren nach Anspruch 15,
**dadurch gekennzeichnet, dass** mindestens eine Bewegungspause (S3a-S3n) vorgesehen ist, während der das Bewegen des Produktmassenbearbeitungswerkzeugs (17) unterbrochen oder wesentlich verlangsamt wird und dass das Erfassen der dielektrischen Eigenschaften innerhalb der Bewegungspause (S3a-S3n) bei Stillstand oder verlangsamter Bewegung des Produktmassenbearbeitungswerkzeugs (17) erfolgt oder das Erfassen der dielektrischen Eigenschaften kontinuierlich erfolgt und eine Auswertung der während der Bewegungspause (S3a-S3n) bei Stillstand oder verlangsamter Bewegung des Produktmassenbearbeitungswerkzeugs (17) erfassten dielektrischen Eigenschaften vorgenommen wird.

17. Verfahren nach Anspruch 15 oder 16,
**dadurch gekennzeichnet, dass** mehrere Bewegungspausen (S3a-S3n) vorgesehen sind und das Produktmassenbearbeitungswerkzeug (17) in den Bewegungspausen (S3a-S3n) jeweils im Wesentlichen an der gleichen Position entlang einer Bewegungsbahn (B) desselben zum Stillstand gebracht oder verlangsamt bewegt wird, wobei das Produktmassenbearbeitungswerkzeug (17) vorzugsweise innerhalb eines Abschnitts der Bewegungsbahn (B) desselben zum Stillstand gebracht oder verlangsamt bewegt wird, in dem das Produktmassenbearbeitungswerkzeug (17) einen Anbringungsort des dielektrischen Sensors (44) überstreicht.

18. Verfahren nach einem der Ansprüche 14 bis 17,
**dadurch gekennzeichnet, dass** zugleich mit den dielektrischen Eigenschaften eine Temperatur der Produktmasse (M) in der Umgebung des dielektrischen Sensors (44) kontinuierlich oder zumindest zeitweise erfasst wird.

19. Verfahren nach einem der Ansprüche 14 bis 18,
**dadurch gekennzeichnet, dass** die dielektrischen Eigenschaften, insbesondere die dielektrischen Eigenschaften und die Temperatur, der Produktmasse (M) an mehreren Erfassungsstellen (42a-c) erfasst werden und insbesondere dass hierbei die Erfassungsstellen (42a-c) entlang einer Bahn (B), der das Produktmassenbearbeitungswerkzeug (17) bei der Bearbeitung der Produktmasse (M) in wiederholter Weise folgt, voneinander beabstandet (α, β) angeordnet sind und nacheinander von dem Produktmassenbearbeitungswerkzeug (17) überstrichen werden.
